(19) Europäisches Patentamt
European Patent Office
Office européen des brevets

(11) **EP 4 364 968 B1**

(12) **EUROPEAN PATENT SPECIFICATION**

(45) Date of publication and mention
of the grant of the patent:
**03.12.2025 Bulletin 2025/49**

(51) International Patent Classification (IPC):
***B60C 9/20*** *(2006.01)*        ***B60C 9/22*** *(2006.01)*
***B60C 11/00*** *(2006.01)*

(21) Application number: 23205125.0

(22) Date of filing: **23.10.2023**

(52) Cooperative Patent Classification (CPC):
**B60C 9/2204;** B60C 9/0007; B60C 9/2006;
B60C 2009/2238; B60C 2009/2252;
B60C 2009/2261; B60C 2009/2266;
B60C 2009/2285; B60C 2011/0025;
B60C 2011/0033; B60C 2200/06

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **01.11.2022  JP 2022175442**

(43) Date of publication of application:
**08.05.2024  Bulletin 2024/19**

(73) Proprietor: **Sumitomo Rubber Industries, Ltd.
Kobe-shi, Hyogo 651-0072 (JP)**

(72) Inventors:
• **INOUE, Manabu
  Kobe-shi 651-0072 (JP)**
• **IZUMO, Suguru
  Kobe-shi 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 2 065 226    EP-A1- 3 711 978
EP-A1- 4 227 113    JP-A- H09 105 084**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a tire.

BACKGROUND ART

In recent years, low-floor trucks have been developed to increase the load capacity. Therefore, low-profile wider tires are studied. A wide heavy-duty tire has a disadvantage in that, when its outer diameter grows due to an increase in the internal pressure during driving, the outer diameter growth rates are significantly different between the center portion and the edge portions of the tread. One proposed technology to solve this issue is addition of a reinforcing layer including steel cords arranged in the tire circumferential direction (see, Patent Literatures 1 and 2).

CITATION LIST

PATENT LITERATURE

Patent Literature 1: JP 2001-522748 T
Patent Literature 2: JP 2000-504655 T

EP 2 065 226 A1 discloses a tire comprising the features according to the preamble of claim 1.
JP H09 105084 A discloses a tire comprising features according to a related technology.
EP 4 227 113 A1 being published after the priority date of the present application also discloses a tire comprising features according to a related technology.
EP 3 711 978 A1 also discloses a tire comprising features according to a related technology.

SUMMARY OF INVENTION

TECHNICAL PROBLEM

The technology still needs to be improved in terms of ride quality and durability. Improvement in the properties is desired in, for example, wide heavy-duty tires.
The present invention aims to solve the above problem and provide a tire with excellent overall performance in terms of ride quality and durability.

SOLUTION TO PROBLEM

The present invention relates to a tire, including a circumferential reinforcing layer including a wound bundle of two or more parallel cords and a cap tread, wherein,

provided that
the cords each have a flexural stiffness F (cm $\times$ g);
the parallel cords of a bundle consist of a number N (number) of cords;
a tread portion has a thickness D (mm) on a straight line extending from a radially upper edge of the circumferential reinforcing layer in a tire width direction to a surface of the tread portion;
the cap tread includes a rubber composition having a complex modulus of elasticity E (MPa) as measured at a temperature of 70°C, an initial strain of 10%, a dynamic strain of $\pm$ 1%, a frequency of 10 Hz, and elongation mode;
the circumferential reinforcing layer has a bundle stiffness S (cm $\times$ g $\times$ number) defined by F $\times$ N; and
the tread portion has a stiffness G (N/mm) defined by E $\times$ D,
the tire has a ratio of the bundle stiffness S of the circumferential reinforcing layer to the stiffness G of the tread portion, S/G (10g $\times$ mm$^2$ $\times$ number/N), of 10.6 or lower.

ADVANTAGEOUS EFFECTS OF INVENTION

The tire of the present invention includes a circumferential reinforcing layer including a wound bundle of two or more parallel cords and a cap tread and satisfies the ratio S/G of 10.6 or lower. Thus, the present invention can provide a tire with excellent overall performance in terms of ride quality and durability.

BRIEF DESCRIPTION OF DRAWINGS

FIG. 1 shows a partial cross-sectional view of a heavy-duty pneumatic tire according to an embodiment of the present invention.
FIG. 2 shows an outline diagram to explain the structure of a reinforcing layer.
FIG. 3 shows a schematic cross-sectional view of a bundle of two or more parallel cords.
FIGS. 4A and 4B each show a schematic view of a band including a bundle of two or more parallel cords wound around a tire.
FIG. 5 shows schematic cross-sectional views of cords with a M $\times$ N structure.
FIG. 6 shows an enlarged partial cross-sectional view of the tire in FIG. 1.
FIG. 7 shows an enlarged cross-sectional view of an exemplary modified reinforcing layer.
FIG. 8 shows an enlarged cross-sectional view of another exemplary modified reinforcing layer.
FIG. 9 shows a schematic view of a tester for flexural stiffness of cords.

DESCRIPTION OF EMBODIMENTS

The present invention relates to a tire, including a circumferential reinforcing layer including a wound bundle of two or more parallel cords and a cap tread, wherein,

provided that
the cords each have a flexural stiffness F (cm $\times$ g);
the parallel cords consist of a number N (number) of cords;
a tread portion has a thickness D (mm) on a straight line extending from an edge of the circumferential reinforcing layer in a tire width direction to a surface of the tread portion;
the cap tread includes a rubber composition having a complex modulus of elasticity E (MPa) as measured at a temperature of 70°C, an initial strain of 10%, a dynamic strain of $\pm$ 1%, a frequency of 10 Hz, and elongation mode;
the circumferential reinforcing layer has a bundle stiffness S (cm $\times$ g $\times$ number) defined by F $\times$ N; and
the tread portion has a stiffness G (N/mm) defined by E $\times$ D,
the tire has a ratio of the bundle stiffness S of the circumferential reinforcing layer to the stiffness G of the tread portion, S/G (10g $\times$ mm$^2$ $\times$ number/N), of 10.6 or lower.

The reason for the advantageous effect is not exactly clear, but it is presumably due to the following mechanism.
For example, a tire including a circumferential reinforcing layer with a jointless band structure in which one steel cord is continuously wound may be damaged from a broken part of the steel cord when the cord is broken during driving on a rough road, for example. On the other hand, when multiple cords are used, stiffness difference in the tire circumferential direction may occur at the parts of the end and the beginning of winding, potentially reducing ride quality.
During driving on a rough road, for example, cords in a jointless band may be broken when the tire rolls on a sharp stone or debris or a nail. A jointless band including only one wound cord significantly reduces its effect when the cord is broken.
In contrast, a jointless band including two or more wound cords can be prevented from significantly reducing its effect even if one cord is broken because other cords maintain the function of the jointless band.
In a jointless band including only one wound cord, the boundary area (interface) of a rubber layer coating the cord is large. Tiny voids (air bubbles) are likely to occur in the gap at the large boundary. Stress concentrates on the voids, from which cracks are likely to occur.
For example, the occurrence of the voids can be reduced by a jointless band including a wound bundle of two or more parallel cords. Presumably, the durability of the tire is thus improved.
A jointless band suddenly becomes absent or present at the parts of the beginning and the end of winding of the jointless band.
For example, when a jointless band has a high bundle stiffness defined by a product of the flexural stiffness of each cord in the jointless band and the number of parallel cords, vibration is caused by switching between presence and absence of the jointless band at an edge of the jointless band during rolling of the tire. Therefore, the stiffness of the tread portion defined by a product of the distance from an edge of the jointless band to the tread surface and the complex modulus of elasticity of a cap tread is controlled to be sufficiently large relative to the bundle stiffness of the jointless band to thereby suppress the vibration at the parts of the end and the beginning of winding of the jointless band. Presumably, ride equality is thus improved.

Due to the above-described mechanism, the present invention can ensure restriction by the jointless band and suppress vibration at the edge while reducing the occurrence of cracking. Presumably, the present invention can thus provide a tire with excellent overall performance in terms of ride quality and durability.

The present invention solves the problem (aim) in improving overall performance in terms of ride quality and durability by providing a tire that includes a circumferential reinforcing layer including a wound bundle of two or more parallel cords and a cap tread and satisfies "a ratio S/G of the bundle stiffness S of the circumferential reinforcing layer to the stiffness G of the tread portion of 10.6 or lower". In other words, the parameter of "a ratio S/G of the bundle stiffness S of the circumferential reinforcing layer to the stiffness G of the tread portion of 10.6 or lower" does not define the problem (aim). The problem herein is to improve overall performance in terms of ride quality and durability. In order to solve the problem, the tire has been formulated to satisfy the parameter.

An embodiment of the present invention will be described below with reference to drawings. The embodiment is merely an exemplary embodiment, and the tire of the present invention is not limited to the embodiment described below.

Herein, the term "normal state" refers to a state where the tire is mounted on a normal rim (not shown), inflated to a normal internal pressure, and under no load.

Herein, the dimensions of the parts of the tire are measured for the tire in the normal state, unless otherwise stated.

If measurement of the tire mounted on a normal rim is impossible, the dimensions and angles of the parts of the tire in a meridional cross-section of the tire are measured in a cross-section of the tire cut along a plane including the axis of rotation, in which the distance between the right and left beads corresponds to the distance between the beads in the tire mounted on a normal rim.

The term "cross-sectional width Wt (mm)" of the tire refers to the largest width of the tire in the normal state between the outer surfaces of the sidewalls, excluding patterns, letters, and the like on the sides of the tire, if present.

The term "outer diameter Dt (mm)" of the tire refers to the outer diameter of the tire in the normal state.

The term "cross-sectional height Ht (mm)" of the tire refers to the height in the tire radial direction in a radial cross-section of the tire. Provided that the rim diameter of the tire is R (mm), the height corresponds to a half of the difference between the outer diameter Dt and the rim diameter R of the tire. In other words, the cross-sectional height Ht can be determined by (Dt - R)/2.

Herein, the term "profile" of a tire refers to a ratio in percentage of the cross-sectional height Ht (mm) of a tire to the cross-sectional width Wt (mm) of the tire. The profile can be determined by Ht/Wt × 100.

The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard in a standard system including standards according to which the tire is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

Herein, the term "normal load" refers to a load specified for each tire by the standard in a standard system including standards according to which the tire is provided, and may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following expressions.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume (mm³) of tire
Dt: outer diameter (mm) of tire
Ht: cross-sectional height (mm) of tire
Wt: cross-sectional width (mm) of tire

The tire of the present invention includes a cap tread.

The term "cap tread" in the present invention refers to a component that is located on the outermost side in the tire radial direction and will contact the road among treads. In a monolayer tread, the monolayer tread itself corresponds to a cap tread. In a two-layer tread consisting of a cap portion and a base portion, the cap portion corresponds to a cap tread. In a three or more-layer tread, the outermost layer which will contact the road among the three or more layers corresponds to a cap tread, and the intermediate layer may be either a cap portion or a base portion.

A rubber composition forming the cap tread (cap tread rubber composition) desirably has a complex modulus of elasticity (E) of 5.5 MPa or more as measured at a temperature of 70°C, an initial strain of 10%, a dynamic strain of ± 1%, a frequency of 10 Hz, and elongation mode to increase the stiffness G of the tread portion and facilitate suppression of vibration at an edge of the circumferential reinforcing layer. The E is more preferably 5.9 MPa or more, still more preferably 6.2 MPa or more.

On the other hand, to facilitate absorption of vibration on the surface of the tread portion, the complex modulus of elasticity (E) is desirably 7.8 MPa or less, preferably 6.8 MPa or less, more preferably 6.6 MPa or less, still more preferably 6.4 MPa or less. When the E is within the range indicated above, the advantageous effect can be suitably achieved.

Herein, the term "complex modulus of elasticity (E)" refers to the complex modulus of elasticity of the cap tread in a molded tire. The complex modulus of elasticity of a rubber composition refers to the complex modulus of elasticity of a vulcanized rubber composition. Specifically, the complex modulus of elasticity is measured by a method described later in EXAMPLES.

Herein, the complex modulus of elasticity of the cap tread refers to a complex modulus of elasticity measured at a temperature of 70°C, an initial strain of 10%, a dynamic strain of ± 1%, a frequency of 10 Hz, and elongation mode. A sample for the measurement is collected in a size of a width of 4 mm, a length of 20 mm, and a thickness of 1 mm from the cap tread of a produced tire, while the longitudinal direction of the sample is controlled to be in the tire circumferential direction.

The complex modulus of elasticity of a rubber composition can be varied by the types and amounts of chemicals (in particular, rubber components, fillers, and softeners such as oils) blended in the rubber composition. For example, the complex modulus of elasticity tends to be increased by reducing the amount of softeners or increasing the amount of fillers.

The cap tread rubber composition contains one or more rubber components.

The rubber components contribute to crosslinking and generally correspond to polymer components which have a weight average molecular weight (Mw) of 10000 or more and which are not extractable with acetone. The rubber components are solid at room temperature (25°C).

The weight average molecular weight of the rubber components is preferably 50000 or more, more preferably 150000 or more, still more preferably 200000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKgel SuperMultipore HZ-M available from Tosoh Corporation) and calibrated with polystyrene standards.

Examples of rubber components that may be used in the cap tread rubber composition include diene-based rubbers. Examples of diene-based rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combinations of two or more. To better achieve the advantageous effect, isoprene-based rubbers, BR, and SBR are preferred, with NR and SBR being more preferred. Here, these rubber components may be subjected to the below-described modification or hydrogenation process. Rubbers extended with oils, resins, liquid rubber components, etc. are also usable.

The diene-based rubbers may be either unmodified or modified diene-based rubbers.

The modified diene-based rubbers may be any diene-based rubber having a functional group interactive with filler such as silica. Examples include a chain end-modified diene-based rubber obtained by modifying at least one chain end of a diene-based rubber with a compound (modifier) having the above functional group (i.e., a chain end-modified diene-based rubber terminated with the functional group); a backbone-modified diene-based rubber having the functional group in the backbone; a backbone- and chain end-modified diene-based rubber having the functional group in both the backbone and a chain end (e.g., a backbone- and chain end-modified diene-based rubber in which the backbone has the functional group and at least one chain end is modified with the modifier); and a chain end-modified diene-based rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of isoprene-based rubbers include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more.

The amount of isoprene-based rubbers, if present, based on 100% by mass of the rubber component content in the cap tread rubber composition is preferably 50% by mass or more, more preferably 70% by mass or more, still more preferably 80% by mass or more. The upper limit of the amount is not limited and may be 100% by mass. When the amount is within the range indicated above, the advantageous effect tends to be better achieved.

Any BR may be used, and examples include high-cis BR having high cis content, BR containing syndiotactic polybutadiene crystals, and BR synthesized using rare earth catalysts (rare earth-catalyzed BR). These may be used alone or in combinations of two or more. In particular, the BR preferably includes high-cis BR having a cis content of 90% by mass or higher. The cis content is more preferably 95% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the expression: {Σ(amount of each BR $\times$ cis content of the each BR) }/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 $\times$ 90 + 10 $\times$ 40)/(20 + 10)).

Moreover, the BR may be either unmodified or modified BR. Examples of the modified BR include those into which functional groups as listed for the modified diene-based rubbers have been introduced. The BR may also be hydrogenated polybutadiene polymers (hydrogenated BR).

Examples of usable BR include products available from Ube Industries, Ltd., JSR Corporation, Asahi Kasei Corporation, Zeon Corporation, Lanxess AG, etc.

The amount of BR based on 100% by mass of the rubber component content in the cap tread rubber composition is preferably 50% by mass or less, more preferably 40% by mass or less, still more preferably 30% by mass or less, further preferably 20% by mass or less. When the amount is within the range indicated above, the advantageous effect tends to be better achieved.

Any SBR may be used. Examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 8% by mass or higher, still more preferably 10% by mass or higher. The styrene content is preferably 35% by mass or lower, more preferably 30% by mass or lower, still more preferably 25% by mass or lower. When the styrene content is within the range indicated above, heat generation is suppressed, whereby improvement of durability tends to be facilitated.

Herein, the styrene content can be measured by $^1$H-NMR analysis.

When one type of SBR is used, the styrene content of the SBR refers to the styrene content of the one SBR, while when multiple types of SBR are used, it refers to the average styrene content.

The average styrene content of the SBR can be calculated using the expression: {Σ(amount of each SBR $\times$ styrene content of the each SBR) }/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 $\times$ 40 + 5 $\times$ 25)/(85 + 5)).

The vinyl bond content of the SBR is preferably 3% by mass or higher, more preferably 5% by mass or higher, still more preferably 7% by mass or higher. The vinyl bond content is preferably 35% by mass or lower, more preferably 30% by mass or lower, still more preferably 25% by mass or lower. When the vinyl bond content is within the range indicated above, handling stability during high-speed driving tends to be improved.

Herein, the vinyl bond content (1,2-butadiene unit content) can be measured by infrared absorption spectrometry.

The vinyl bond content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl bond content of the SBR refers to the vinyl bond content of the one SBR, while when multiple types of SBR are used, it refers to the average vinyl bond content.

The average vinyl bond content of the SBR can be calculated using the expression: $\Sigma$\{amount of each SBR $\times$ (100 (% by mass) - styrene content (% by mass) of the each SBR) $\times$ vinyl bond content (% by mass) of the each SBR\}/$\Sigma$\{amount of each SBR $\times$ (100 (% by mass) - styrene content (% by mass) of the each SBR)\}. For example, when 100 parts by mass of rubber components include 75 parts by mass of SBR having a styrene content of 40% by mass and a vinyl bond content of 30% by mass, 15 parts by mass of SBR having a styrene content of 25% by mass and a vinyl bond content of 20% by mass, and the remaining 10 parts by mass of a rubber component other than SBR, the average vinyl bond content of the SBR is 28% by mass (= \{75 $\times$ (100 (% by mass) - 40 (% by mass)) $\times$ 30 (% by mass) + 15 $\times$ (100 (% by mass) - 25 (% by mass)) $\times$ 20 (% by mass)\}/\{75 $\times$ (100 (% by mass) - 40 (% by mass)) + 15 $\times$ (100 (% by mass) - 25 (% by mass))\}.

The SBR may be either unmodified or modified SBR. Examples of the modified SBR include those into which functional groups as listed for the modified diene-based rubbers have been introduced. The SBR may also be hydrogenated styrene-butadiene copolymers (hydrogenated SBR) .

SBR products manufactured or sold by Sumitomo Chemical Co., Ltd., JSR Corporation, Asahi Kasei Corporation, Zeon Corporation, etc. may be used as the SBR.

The amount of SBR, if present, based on 100% by mass of the rubber component content in the cap tread rubber composition is preferably 5% by mass or more, more preferably 50% by mass or more, still more preferably 70% by mass or more, further preferably 80% by mass or more. The upper limit of the amount is preferably 95% by mass or less, more preferably 90% by mass or less, still more preferably 85% by mass or less. When the amount is within the range indicated above, the advantageous effect tends to be better achieved.

The cap tread rubber composition may contain a filler.

Any filler may be used, including materials known in the rubber field. Examples include inorganic fillers such as carbon black, silica, calcium carbonate, talc, alumina, clay, aluminum hydroxide, aluminum oxide, and mica; bio char; and hard-to-disperse fillers.

The total amount of the filler (the total amount of fillers such as silica and carbon black) per 100 parts by mass of the rubber component content in the cap tread rubber composition is preferably 30 parts by mass or more, more preferably 40 parts by mass or more, still more preferably 50 parts by mass or more, particularly preferably 60 parts by mass or more. The upper limit of the total amount is preferably 120 parts by mass or less, more preferably 100 parts by mass or less, still more preferably 80 parts by mass or less. When the total amount is within the range indicated above, the advantageous effect tends to be better achieved.

Carbon-derived fillers (carbon-containing fillers), such as carbon black, and silica are preferred among the fillers.

Any carbon black may be used in the cap tread rubber composition or belt layer coating rubber composition. Examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more. In addition to the conventional carbon black made from mineral oils, etc., carbon black made from biomass materials such as lignin is also usable. Moreover, the carbon black may be appropriately replaced with an equivalent amount of recycled carbon black produced by decomposing a rubber or plastic product containing carbon black, such as tires.

The nitrogen adsorption specific surface area ($N_2SA$) of the carbon black in the cap tread rubber composition is preferably 50 m$^2$/g or more, more preferably 70 m$^2$/g or more, still more preferably 90 m$^2$/g or more. The $N_2SA$ is preferably 200 m$^2$/g or less, more preferably 150 m$^2$/g or less, still more preferably 120 m$^2$/g or less. When the $N_2SA$ is within the range indicated above, the advantageous effect tends to be better achieved.

Here, the nitrogen adsorption specific surface area of the carbon black can be determined in accordance with JIS K 6217-2:2001.

The amount of carbon black per 100 parts by mass of the rubber component content in the cap tread rubber composition is preferably 5 parts by mass or more, more preferably 40 parts by mass or more, still more preferably 45 parts by mass or more, particularly preferably 50 parts by mass or more. The upper limit of the amount is preferably 100 parts by mass or less, more preferably 90 parts by mass or less, still more preferably 80 parts by mass or less, further preferably 70 parts by mass or less, further preferably 60 parts by mass or less. When the amount is within the range indicated above, the advantageous effect tends to be better achieved.

Examples of silica usable in the cap tread rubber composition or belt layer coating rubber composition include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more. In addition to the above-mentioned types of silica, silica made from biomass materials such as rice husks is also usable.

The nitrogen adsorption specific surface area ($N_2SA$) of the silica is preferably 50 $m^2$/g or more, more preferably 100 $m^2$/g or more, still more preferably 150 $m^2$/g or more, further preferably 175 $m^2$/g or more, particularly preferably 180 $m^2$/g or more, most preferably 190 $m^2$/g or more. The upper limit of the $N_2SA$ of the silica is not limited, and it is preferably 350 $m^2$/g or less, more preferably 300 $m^2$/g or less, still more preferably 250 $m^2$/g or less. When the $N_2SA$ is within the range indicated above, the advantageous effect tends to be better achieved.

Here, the $N_2SA$ of the silica is measured by a BET method in accordance with ASTM D3037-93.

The amount of silica, if present, per 100 parts by mass of the rubber component content in the cap tread rubber composition is preferably 1 part by mass or more, more preferably 3 parts by mass or more, still more preferably 5 parts by mass or more, particularly preferably 10 parts by mass or more. The upper limit of the amount is preferably 100 parts by mass or less, more preferably 80 parts by mass or less, still more preferably 60 parts by mass or less. When the amount is within the range indicated above, the advantageous effect tends to be better achieved.

When the cap tread rubber composition contains silica, it preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the cap tread rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. One type of these microfibrillated plant fibers may be used alone or two or more types of these may be used in combination.

Herein, the term "cellulose microfibrils" typically refers to cellulose fibers having an average fiber diameter of not more than 10 μm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

The amount of hard-to-disperse fillers per 100 parts by mass of the rubber component content in the cap tread rubber composition is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The cap tread rubber composition may contain a plasticizer.

The term "plasticizer" refers to a material that can impart plasticity to rubber components. It may be a plasticizer that is either liquid or solid at room temperature (25°C)).

The amount of plasticizers (the total amount of plasticizers) per 100 parts by mass of the rubber component content in the cap tread rubber composition is preferably 1 part by mass or less, more preferably 5 parts by mass or less, still more preferably 8 parts by mass or less, while it is preferably 20 parts by mass or less, more preferably 18 parts by mass or less, still more preferably 15 parts by mass or less. When the amount is within the range indicated above, the advantageous effect tends to be better achieved. It should be noted that when the above-mentioned extended rubbers are used, the amount of the extender components used in the extended rubbers is included in the amount of plasticizers.

Any plasticizer may be used in the cap tread rubber composition. Examples include oils and liquid polymers (liquid resins, liquid diene polymers, etc.), and resins. These may be used alone or in combinations of two or more.

Examples of oils include process oils, plant oils, and mixtures thereof. Examples of process oils include paraffinic process oils, aromatic process oils, and naphthenic process oils, such as mild extract solvates (MES), distillate aromatic extracts (DAE), treated distillate aromatic extracts (TDAE), treated residual aromatic extracts (TRAE), and residual aromatic extracts (RAE). Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., Japan Energy, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these. In view of life cycle assessment, oils obtained by purifying lubricating oils used in rubber mixing machines, engines, or other applications, or waste cooking oils used in cooking establishments may also be used as the oils.

Examples of liquid polymers include liquid diene polymers and below-mentioned liquid resins which are liquid at room temperature (25°C). Examples of liquid diene polymers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at a chain end or the backbone with a polar group. Hydrogenated products of these polymers are also usable.

Examples of the resins usable in the cap tread rubber composition include aromatic vinyl polymers, coumarone-indene resins, coumarone resins, indene resins, phenol resins, rosin resins, petroleum resins, terpene resins, and acrylic resins, all of which are solid at room temperature (25°C). These resins may also be hydrogenated. These may be used alone or in combinations of two or more. Aromatic vinyl polymers, petroleum resins, and terpene resins are preferred among these. These resin components may be either solid or liquid at room temperature (25°C).

The amount of the resins, if present, per 100 parts by mass of the rubber component content in the cap tread rubber composition is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved.

The softening point of the resins which are solid at room temperature (25°C) is preferably 60°C or higher, more preferably 70°C or higher, still more preferably 80°C or higher. The upper limit is preferably 160°C or lower, more preferably 130°C or lower, still more preferably 115°C or lower. When the softening point is within the range indicated above, the inside of the cap tread rubber composition can more easily absorb vibration from the road so that the ride quality tends to be improved.

Here, the softening point of the resins is determined in accordance with JIS K 6220-1:2001 using a ring and ball softening point measuring apparatus. The temperature at which the ball drops down is defined as the softening point. The softening point of the resins indicated above is usually higher by 50°C ± 5°C than the glass transition temperature of the resins.

The softening point of the resins which are liquid at room temperature (25°C) is 25°C or lower, preferably 15°C or lower, more preferably 0°C or lower.

The aromatic vinyl polymers refer to polymers containing aromatic vinyl monomers as structural units. Examples include resins produced by polymerization of $\alpha$-methylstyrene and/or styrene. Specific examples include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of the foregoing resins. DCPD resins or hydrogenated DCPD resins are preferred among these.

The terpene resins refer to polymers containing terpenes as structural units. Examples include polyterpene resins produced by polymerization of terpene compounds, and aromatic modified terpene resins produced by polymerization of terpene compounds and aromatic compounds. Hydrogenated products of these resins are also usable.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene skeleton and is classified as a monoterpene $(C_{10}H_{16})$, sesquiterpene $(C_{15}H_{24})$, diterpene $(C_{20}H_{32})$, or other terpenes. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, α-pinene and β-pinene, are classified into β-pinene resins mainly containing β-pinene and α-pinene resins mainly containing α-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol, and examples of the styrene compounds include styrene and α-methylstyrene.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4414370, JP S59-6207 A, JP H5-58005 B, JP H1-313522 A, US Patent No. 5010166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

In view of properties such as cracking resistance and ozone resistance, the cap tread rubber composition preferably contains an antioxidant.

Non-limiting examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate] methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component content in the cap tread rubber composition is preferably 0.5 parts by mass or more, more preferably 1.0 parts by mass or more, still more preferably 2.0 parts by mass or more. The amount is preferably 7.0 parts by mass or less, more preferably 4.0 parts by mass or less, still more preferably 3.0 parts by mass or less.

The cap tread rubber composition preferably contains stearic acid.

The amount of stearic acid per 100 parts by mass of the rubber component content in the cap tread rubber composition is preferably 0.5 parts by mass or more, more preferably 1.0 parts by mass or more, still more preferably 2.0 parts by mass or more. The amount is preferably 7.0 parts by mass or less, more preferably 4.0 parts by mass or less, still more preferably 3.0 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., etc.

The cap tread rubber composition preferably contains zinc oxide.

The amount of zinc oxide per 100 parts by mass of the rubber component content in the cap tread rubber composition is preferably 0.5 parts by mass or more, more preferably 1.0 parts by mass or more, still more preferably 2.0 parts by mass or more, further preferably 3.0 parts by mass or more. The amount is preferably 12.0 parts by mass or less, more preferably 11.0 parts by mass or less, still more preferably 10.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The cap tread rubber composition may contain a wax.

The amount of waxes per 100 parts by mass of the rubber component content in the cap tread rubber composition is preferably 0.5 parts by mass or more, more preferably 1.0 parts by mass or more, still more preferably 1.5 parts by mass or more, further preferably 2.0 parts by mass or more. The amount is preferably 10.0 parts by mass or less, more preferably 7.0 parts by mass or less, still more preferably 5.0 parts by mass or less.

Any wax may be used, and examples include petroleum waxes, natural waxes, and synthetic waxes produced by purifying or chemically treating a plurality of waxes. These waxes may be used alone or in combinations of two or more.

Examples of petroleum waxes include paraffin waxes and microcrystalline waxes. Any natural wax derived from non-petroleum resources is usable. Examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. For example, usable commercial products are available from Ouchi Shinko Chemical Industrial Co., Ltd., Nippon Seiro Co., Ltd., Seiko Chemical Co., Ltd., etc.

The cap tread rubber composition preferably contains sulfur to moderately form crosslinks between the polymer chains, thereby imparting good properties.

The amount of sulfur per 100 parts by mass of the rubber component content in the cap tread rubber composition is preferably 0.1 parts by mass or more, more preferably 1.0 parts by mass or more, still more preferably 1.2 parts by mass or more, further preferably 1.7 parts by mass or more. The amount is preferably 6.0 parts by mass or less, more preferably 5.0 parts by mass or less, still more preferably 4.0 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The cap tread rubber composition preferably contains a vulcanization accelerator.

The amount of vulcanization accelerators in the cap tread rubber composition is not limited and may be freely determined according to the desired curing rate and crosslink density. The amount of vulcanization accelerators per 100 parts by mass of the rubber component content is preferably 0.5 parts by mass or more, more preferably 1.0 parts by mass or more, still more preferably 1.5 parts by mass or more, further preferably 2.5 parts by mass or more. The upper limit of the amount is preferably 8.0 parts by mass or less, more preferably 6.0 parts by mass or less, still more preferably 4.0 parts by mass or less.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators, guanidine vulcanization accelerators, and benzothiazole vulcanization accelerators are preferred among these.

In addition to the above-mentioned components, the cap tread rubber composition may appropriately contain compounding agents commonly used in the tire industry such as releasing agents or other materials.

The above-mentioned materials may be used in rubber compositions to form components other than the cap tread while appropriately changing the amounts. When the component other than the cap tread is a coating rubber layer in a component including steel cords as a reinforcing material, such as a circumferential belt layer, a belt layer, or a carcass layer, the component preferably includes a thermosetting resin or a fatty acid salt including an element whose ionization tendency is that between copper and zinc, such as cobalt, to increase the adhesion to the steel cords.

The cap tread rubber composition, etc. may be prepared by known methods. For example, they may be prepared by kneading the compounding components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 50°C to 200°C, preferably 80°C to 190°C, and the kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120°C to 200°C, preferably 140°C to 180°C.

The present invention may be applied to a tire such as a pneumatic tire or a non-pneumatic tire, preferably a pneumatic tire. In particular, the tire may be suitably used as a summer tire or winter tire (e.g., studless winter tire, snow tire, studded tire). The tire may be used as a tire for passenger cars, large passenger cars, large SUVs, heavy-duty vehicles such as trucks and buses, light trucks, or motorcycles, or as a racing tire (high performance tire), etc. The tire is preferably a heavy-duty tire.

Herein, the term "heavy-duty tire" refers to a tire with a normal load of 1400 kg or more which is to be mounted on vehicles with four or more wheels.

The tire can be produced by a common method. For example, before vulcanization, components such as a cap tread and a circumferential reinforcing layer including cords and a coating rubber integrated together are produced by a known method. The components are molded on a tire building machine by a common method to form an unvulcanized tire. The unvulcanized tire is heated and pressurized in a vulcanizer. Thus, the tire can be obtained.

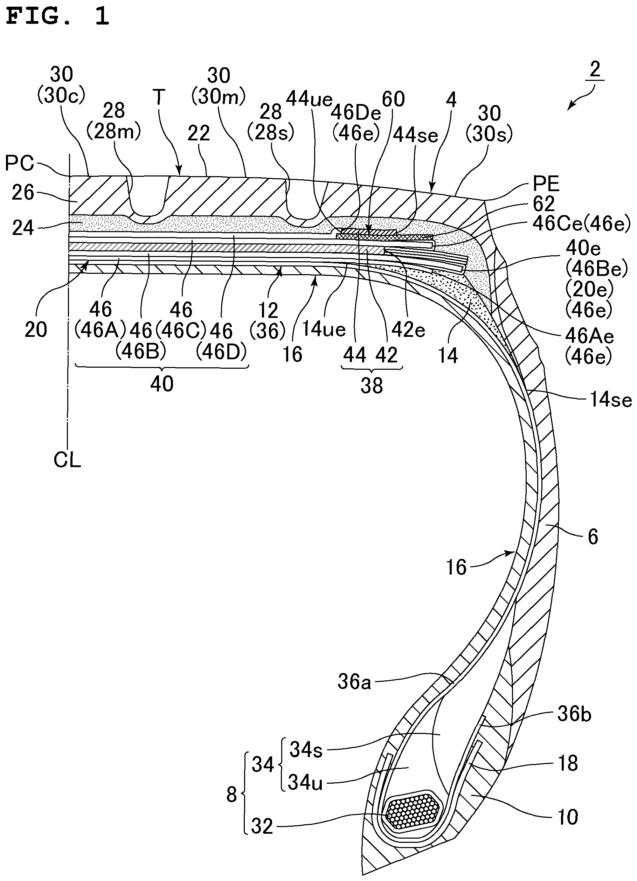

FIG. 1 shows a part of a heavy-duty pneumatic tire 2 (hereinafter, also simply referred to as tire 2) according to an embodiment of the present invention. The tire 2 will be mounted on vehicles such as trucks and buses. The profile of the tire 2 is preferably 65% or lower. In other words, the tire 2 desirably has a profile of 65% or lower.

FIG. 1 shows a partial cross-section (hereinafter, referred to as a meridional cross-section) of the tire 2 taken along a plane including the rotational axis of the tire 2. In FIG. 1, the horizontal direction corresponds to the axis direction of the tire 2, the vertical direction corresponds to the radial direction of the tire 2, the direction perpendicular to the paper showing FIG. 1 corresponds to the circumferential direction of the tire 2, and the dash-dot chain line CL indicates the equatorial plane of the tire 2.

The tire 2 includes a tread portion 4 including a cap portion 26 (cap tread) and a base portion 24, a pair of sidewalls 6, a pair of beads 8, a pair of chafers 10, a carcass 12, a pair of cushion layers 14, an innerliner 16, a pair of steel fillers 18, and a reinforcing layer 20 including the circumferential reinforcing layer in the present invention.

The tread portion 4 will contact the road at its outer surface. The outer surface corresponds to a tread surface 22. The tread portion 4 has the tread surface 22 which will contact the road. In FIG. 1, the symbol PC denotes an intersection point of the tread surface 22 and the equatorial plane CL. The intersection point PC is also referred to as the equator of the tire 2.

The tread portion 4 in FIG. 1 includes the base portion 24 and the cap portion 26 located radially outward of the base portion 24. The base portion 24 includes, for example, a low exothermic cross-linked rubber. The cap portion 26 includes, for example, a cross-linked rubber prepared taking abrasion resistance and grip performance into consideration. As shown in FIG. 1, the base portion 24 desirably covers the entire reinforcing layer 20. The cap portion 26 desirably covers the entire base portion 24.

Although FIG. 1 shows an example of the tread portion 4 having a two-layer structure consisting of the cap portion 26 and the base portion 24, the tread portion 4 in the tire of the present invention may be a monolayer tread or a three or more-layer tread.

The tire 2 desirably has at least three circumferential grooves 28 engraved in the tread portion 4. The tire 2 in FIG. 1 has four circumferential grooves 28 engraved in the tread portion 4. These circumferential grooves 28 are parallel in the axis direction and continuously extend in the circumferential direction.

Of the four circumferential grooves 28 engraved in the tread portion 4, the circumferential groove 28 located on the outer side in the axis direction is a shoulder circumferential groove 28s, and the circumferential groove 28 located inward of the shoulder circumferential groove 28s in the axis direction is a middle circumferential groove 28m. The four circumferential grooves 28 in the tire 2 consist of a pair of the middle circumferential grooves 28m and a pair of the shoulder circumferential grooves 28s.

As described above, the tread portion 4 desirably has at least three circumferential grooves 28 engraved therein. This tread portion 4 has at least four land portions 30. The tread portion 4 in the tire 2 in FIG. 1 has four circumferential grooves 28 engraved therein and five land portions 30. The land portions 30 are parallel in the axis direction and continuously extend in the circumferential direction.

Of the five land portions 30 in the tread portion 4, the land portion 30 located on the outer side in the axis direction is a shoulder land portion 30s. The shoulder land portion 30s includes an edge PE of the tread surface 22. The land portion 30 located inward of the shoulder land portion 30s in the axis direction is a middle land portion 30m. The land portion 30 located inward of the middle land portion 30m is a center land portion 30c. In the tire 2, five land portions 30 consist of the center land portion 30c, a pair of the middle land portions 30m, and a pair of the shoulder land portions 30s.

In the tire 2, the land portion 30 located at the center in the axis direction among the land portions 30 in the tread portion 4, specifically the center land portion 30c, is present on the equatorial plane. The tire 2 includes the tread portion 4 in which one land portion 30 is present on the tire equatorial plane. The tread portion 4 may have a structure in which one circumferential groove 28 is present on the equatorial plane.

Each sidewall 6 is connected to an edge of the tread portion 4. The sidewall 6 radially inwardly extends from the end of the tread portion 4. The sidewall 6 is located radially inward of the tread portion 4. The sidewall 6 desirably includes a cross-linked rubber.

Each bead 8 is located radially inward of the sidewall 6. The bead 8 includes a core 32 and an apex 34.

The core 32 extends in the circumferential direction. The core 32 includes a wound steel wire. The core 32 desirably has a substantially hexagonal cross-sectional shape.

The apex 34 is located radially outward of the core 32. The apex 34 includes an inner apex 34u and an outer apex 34s. The inner apex 34u radially outwardly extends from the core 32. The outer apex 34s is located radially outward of the inner apex 34u. The inner apex 34u desirably includes a hard cross-linked rubber. The outer apex 34s desirably includes a cross-linked rubber that is softer than the inner apex 34u.

Each chafer 10 is located axially outward of the bead 8. The chafer 10 is located radially inward of the sidewall 6. The chafer 10 will be in contact with a rim (not shown). The chafer 10 desirably includes a cross-linked rubber prepared taking abrasion resistance into consideration.

The carcass 12 is located inward of the tread portion 4, a pair of the sidewalls 6, and a pair of the chafers 10. The carcass 12 extends to bridge one bead 8 to the other bead 8.

The carcass 12 includes at least one carcass ply 36. The carcass 12 in the tire 2 consists of one carcass ply 36. The carcass ply 36 is folded around the core 32 from the inside to the outside in the axis direction. The carcass ply 36 includes a ply main body 36a extending from one core 32 to the other core 32 and a pair of folded portions 36b each connected from the ply main body 36a and folded around the core 32 from the inside to the outside in the axis direction.

Though not shown, the carcass ply 36 desirably has a large number of parallel carcass cords. The carcass cords are coated with a topping rubber. Each carcass cord crosses the equatorial plane. In the tire 2, the angle of the carcass cords relative to the equatorial plane (hereinafter, carcass cord crossing angle) is desirably 70° or greater and 90° or smaller, for example. The carcass 12 has a radial structure. The carcass cords in the tire 2 are desirably steel cords.

In the tire 2, each cushion layer 14 at an edge 20e of the reinforcing layer 20 is located between the reinforcing layer 20 and the carcass 12 (in more detail, the ply main body 36a of the carcass ply 36). An axially inner edge 14ue of the cushion layer 14 is located axially inward of the edge 20e of the reinforcing layer 20. An axially outer edge 14se of the cushion layer 14 is located axially outward of the edge 20e of the reinforcing layer 20. The cushion layer 14 desirably includes a soft cross-linked rubber.

The innerliner 16 is located inward of the carcass 12. The innerliner 16 is bonded to an inner face of the carcass 12 via an insulation (not shown). The innerliner 16 defines the inner face of the tire 2. The innerliner 16 desirably includes a cross-linked rubber with excellent air-blocking property. The innerliner 16 maintains the internal pressure of the tire 2.

Each steel filler 18 is located at a bead portion 8. The steel filler 18 is folded around the core 32 from inside to the outside in the axis direction along the carcass ply 36. Though not shown, the steel filler 18 includes a large number of parallel filler cords. The filler cords are desirably steel cords.

The reinforcing layer 20 including the circumferential reinforcing layer is located radially inward of the tread portion 4.

The reinforcing layer 20 refers to a layer consisting of one layer or two or more layers and is located between the tread portion 4 and the carcass 12. In the present invention, the term "circumferential reinforcing layer" refers to at least one layer in the reinforcing layer 20 and is wound in the tire circumferential direction and crosses the tire equatorial plane. In the present invention, the circumferential reinforcing layer may be any layer in the reinforcing layer. The circumferential reinforcing layer may be any of the outermost layer, the innermost layer, and the layers between them in the tire radial direction in the reinforcing layer. One layer or two or more layers of the layers may be the circumferential reinforcing layer(s). Specific examples include what are called circumferential belt layers and circumferential band layers.

The tire 2 in FIG. 1 includes the reinforcing layer 20 that includes a circumferential reinforcing layer 42 and a belt 40. This tire 2 includes a pair of edge bands 44 in addition to the reinforcing layer 20. The term "circumferential reinforcing layer" in the present invention refers to a reinforcing layer that is connected in the tire axis direction and crosses the tire equatorial plane.

An embodiment of a tire is described below. The tire includes the circumferential reinforcing layer 42 including a belt layer that is inclined to the outer side or inner side in the tire radial direction.

The circumferential reinforcing layer 42 is disposed such that both axially outer edges 42e face each other across the equatorial plane. Each axially outer edge 42e of the circumferential reinforcing layer 42 is located axially inward of an axially outer edge 40e of the belt 40.

A pair of the edge bands 44 in the tire 2 are separated from each other across the equatorial plane in the axis direction. Each edge band 44 in the tire 2 is located between the tread portion 4 and the circumferential reinforcing layer 42. The edge bands 44 are located radially outward of the axially outer edge 42e of the circumferential reinforcing layer 42. An axially inner edge 44ue of each edge band 44 is located axially inward of the axially outer edge 42e of the circumferential reinforcing layer 42. An axially outer edge 44se of each edge band 44 is located axially outward of the axially outer edge 42e of the circumferential reinforcing layer 42. Each edge band 44 radially overlaps the axially outer edge 42e of the circumferential reinforcing layer 42.

In the tire 2, the position of the axially outer edge 44se of each edge band 44 may be identical to the position of the axially outer edge 42e of the circumferential reinforcing layer 42 in the axis direction. In this case, each edge band 44 is located radially outward of the axially outer edge 42e of the circumferential reinforcing layer 42 and radially overlaps the axially outer edge 42e of the circumferential reinforcing layer 42.

The belt 40 desirably includes at least three belt plies 46 which are arranged in the radial direction. Each belt ply 46 is disposed such that both edges 46e thereof face each other across the equatorial plane.

The belt 40 in the tire 2 includes a first belt ply 46A, a second belt ply 46B, a third belt ply 46C, and a fourth belt ply 46D.

The first belt ply 46A in the tire 2 corresponds to the innermost belt ply 46 among the four belt plies 46 in the belt 40. The first belt ply 46A in the tire 2 is stacked on the carcass 12 on the inner side of the tread portion 4.

The second belt ply 46B is located radially outward of the first belt ply 46A.

The third belt ply 46C is located radially outward of the second belt ply 46B.

The fourth belt ply 46D is located radially outward of the third belt ply 46C. The fourth belt ply 46D in the tire 2 corresponds to the radially outermost belt ply 46 among the four belt plies 46 in the belt 40.

The fourth belt ply 46D in the tire 2 is located between a pair of the edge bands 44. The third belt ply 46C is located radially inward of a pair of the edge bands 44. A pair of the edge bands 44 are located radially outward of the first belt ply 46A, the second belt ply 46B, and the third belt ply 46C.

In the tire 2, the second belt ply 46B is axially widest, and the fourth belt ply 46D is axially narrowest. The first belt ply 46A and the third belt ply 46C have the same or almost the same width. Alternatively, the first belt ply 46A is slightly wider than the third belt ply 46C in the axis direction.

The axially outer edge 40e of the belt 40 in the tire 2 corresponds to the axially outer edge 40e of the axially widest belt ply 46 among the belt plies 46 in the belt 40. In the belt 40 in the tire 2, the second belt ply 46B is axially widest as described above. The axially outer edge 40e of the belt 40 in the tire 2 corresponds to an edge 46Be of the second belt ply 46B. The axially outer edge 40e of the belt 40 also corresponds to the axially outer edge 20e of the reinforcing layer 20.

As shown in FIG. 1, in the tire 2, an axially outer edge 46Ae of the first belt ply 46A is located outward of the shoulder circumferential groove 28s. An axially outer edge 46Be of the second belt ply 46B is also located outward of the shoulder circumferential groove 28s in the axial direction. An axially outer edge 46Ce of the third belt ply 46C is also located outward of the shoulder circumferential groove 28s in the axial direction. An axially outer edge 46De of the fourth belt ply 46D is also located outward of the shoulder circumferential groove 28s in the axial direction. In the tire 2, the axially outer edge 46De of the fourth belt ply 46D may be located inward of the shoulder circumferential groove 28s in the axial direction.

As shown in FIG. 1, in the tire 2, the axially outer edge 46Ae of the first belt ply 46A is located outward of the axially outer edge 42e of the circumferential reinforcing layer 42 in the axial direction. The axially outer edge 46Be of the second belt ply 46B is also located outward of the axially outer edge 42e of the circumferential reinforcing layer 42 in the axial direction. The axially outer edge 46Ce of the third belt ply 46C is also located outward of the axially outer edge 42e of the circumferential reinforcing layer 42 in the axial direction.

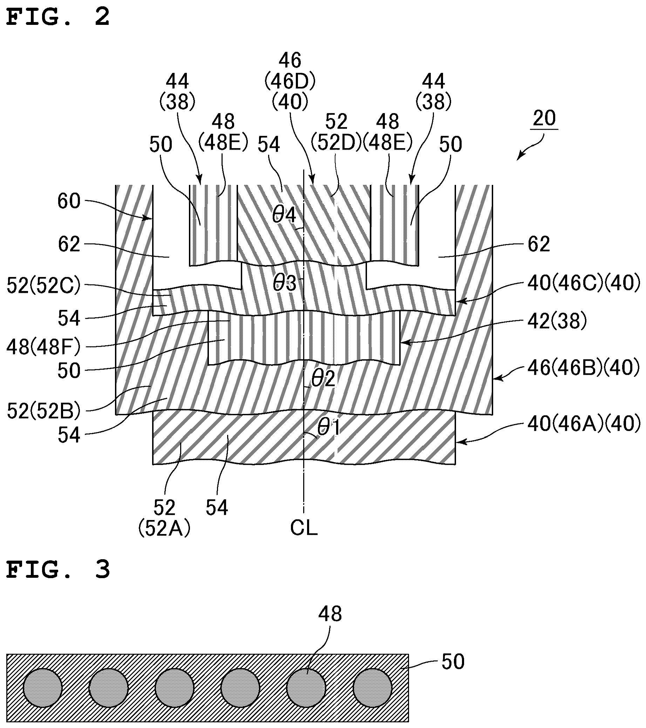

FIG. 2 shows the structure of the reinforcing layer 20 including the circumferential reinforcing layer 42. In FIG. 2, the horizontal direction corresponds to the axis direction of the tire 2, the vertical direction corresponds to the circumferential direction of the tire 2, and the direction perpendicular to the paper showing FIG. 2 corresponds to the radial direction of the tire 2. The front side and the back side of the paper correspond to the outer side and inner side, respectively, in the radial direction.

In the reinforcing layer in the tire 2, the circumferential reinforcing layer 42 and the edge 44 each include spirally-wound band cords 48. In FIG. 2, the band cords 48 are depicted with solid lines for easy description. Yet, the band cords 48 are coated with a coating rubber 50.

The band cords 48 in the tire 2 are preferably steel cords or cords consisting of organic fibers (hereinafter, organic fiber cords), more preferably steel cords. When the band cords 48 are organic fiber cords, examples of the organic fibers include nylon fibers, polyester fibers, rayon fibers, and aramid fibers. In the tire 2, band cords 48F in the circumferential reinforcing layer 42 may be the same as or different from band cords 48E in the edge bands 44. The band cords 48 to be used in the circumferential reinforcing layer 42 and the edge bands 44 may be determined according to the specification of the tire 2.

As described above, the circumferential reinforcing layer 42 includes the spirally-wound band cords 48F. The circumferential reinforcing layer 42 has a jointless structure. In the circumferential reinforcing layer 42, the angle of the band cords 48F to the tire circumferential direction on the equatorial plane is preferably 5° or smaller, more preferably 2° or smaller. The band cords 48F extend substantially in the circumferential direction.

The density of the band cords 48F in the circumferential reinforcing layer 42 is desirably 20 ends/5 cm or more and 35 ends/5 cm or less. The term "density of the band cords 48F" refers to the number of the band cords 48F per 5 cm width of the circumferential reinforcing layer 42 in a cross-section perpendicular to the direction in which the band cords 48F extend in the circumferential reinforcing layer 42.

As described above, each edge band 44 includes the spirally-wound band cords 48E. Each edge band 44 has a jointless structure. In each edge band 44, the angle of the band cords 48E to the circumferential direction is preferably 5° or smaller, more preferably 2° or smaller. The band cords 48E in each edge band 44 extend substantially in the circumferential direction.

The density of the band cords 48E in each edge band 44 is desirably 20 ends/5 cm or more and 35 ends/5 cm or less. The term "density of the band cords 48E" refers to the number of cross-sections of the band cords 48E per 5 cm width of each edge band 44 in a cross-section of the edge band 44 taken along a plane perpendicular to the extending direction of the band cords 48E.

In the present invention, a tire component including parallel cords and the number of the cords per 5 cm width are referred to express the density of the cords in the component (unit: ends/5 cm). The density of the cords is the density in a cross-section of the component taken along a plane perpendicular to the longitudinal direction of the cords, unless otherwise stated.

As shown in FIG. 2, each belt ply 46 in the belt 40 includes a large number of parallel belt cords 52. In FIG. 2, the belt cords 52 are depicted with solid lines for easy description. Yet, the belt cords 52 are coated with a coating rubber 54.

The belt cords 52 in the tire 2 are desirably steel cords. The density of the belt cords 52 in each belt ply 46 is desirably 15 ends/5 cm or more and 30 ends/5 cm or less.

The belt cords 52 in each belt ply 46 are inclined relative to the circumferential direction.

The direction of the inclination of the belt cords 52 in the first belt ply 46A (hereinafter, inclination direction of first belt cords 52A) is desirably the same as the direction of the inclination of the belt cords 52 in the second belt ply 46B (hereinafter, inclination direction of second belt cords 52B).

The inclination direction of the second belt cords 52B is desirably opposite to the direction of the inclination of the belt cords 52 in the third belt ply 46C (hereinafter, inclination direction of third belt cords 52C).

The inclination direction of the third belt cords 52C is desirably the same as the direction of the inclination of the belt cords 52 in the fourth belt ply 46D (hereinafter, inclination direction of fourth belt cords 52D).

In the tire 2, the second belt cords 52B cross the third belt cords 52C in the belt 40. The belt 40 contributes to a stabilized contact patch. The inclination direction of the first belt cords 52A may be opposite to the inclination direction of the second belt cords 52B. The inclination direction of the third belt cords 52C may be opposite to the inclination direction of the fourth belt cords 52D.

In FIG. 2, angle $\theta1$ refers to the angle of the belt cords 52 in the first belt ply 46A to the equatorial plane (hereinafter, inclination angle $\theta1$ of the first belt cords 52A). Angle $\theta2$ refers to the angle of the belt cords 52 in the second belt ply 46B to the equatorial plane (hereinafter, inclination angle $\theta2$ of the second belt cords 52B). Angle $\theta3$ refers to the angle of the belt cords 52 in the third belt ply 46C to the equatorial plane (hereinafter, inclination angle $\theta3$ of the third belt cords 52C). Angle $\theta4$ refers to the angle of the belt cords 52 in the fourth belt ply 46D to the equatorial plane (hereinafter, inclination angle $\theta4$ of the fourth belt cords 52D).

In the tire 2, the inclination angle $\theta1$ of the first belt cords 52A, the inclination angle $\theta2$ of the second belt cords 52B, the inclination angle $\theta3$ of the third belt cords 52C, and the inclination angle $\theta4$ of the fourth belt cords 52D are preferably 10° or greater and preferably 60° or smaller.

To efficiently restrict the movement of a tread portion T and to obtain a ground contact surface shape which is stabilized and changes only little, the inclination angle $\theta1$ of the first belt cords 52A is preferably 40° or greater and is preferably 60° or smaller; the inclination angle $\theta2$ of the second belt cords 52B is more preferably 15° or greater and is more preferably 30° or smaller; the inclination angle $\theta2$ of the second belt cords 52B is still more preferably 20° or smaller; the inclination angle $\theta3$ of the third belt cords 52C is more preferably 15° or greater and is more preferably 30° or smaller; the inclination angle $\theta3$ of the third belt cords 52C is still more preferably 20° or smaller; and the inclination angle $\theta4$ of the fourth

belt cords 52D is more preferably 15° or greater and is more preferably 50° or smaller.

The tire 2 in FIGS. 1 and 2 is in an embodiment in which the circumferential reinforcing layer 42 is a monolayer. The tire 2 may include a multi-layer circumferential reinforcing layer 42.

The tire 2 includes the circumferential reinforcing layer 42 including a wound bundle of two or more parallel band cords 48F.

FIG. 3 shows a schematic cross-sectional view of a bundle of two or more parallel cords and shows an exemplary schematic cross-sectional view of a plane perpendicular to the longitudinal direction of the cords. Specifically, FIG. 3 is a schematic cross-sectional view of a bundle of six parallel band cords 48, schematically showing a bundle of six parallel band cords 48 integrated with the coating rubber 50.

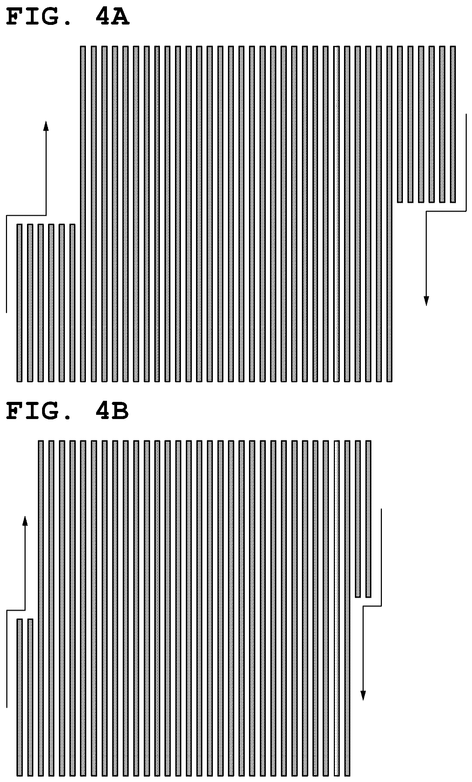

FIGS. 4A and 4B each show a schematic view of the circumferential reinforcing layer 42 in which a bundle of two or more parallel band cords 48 is wound around a tire. In FIGS. 4A and 4B, the horizontal direction corresponds to the axis direction of the tire 2, and the vertical direction corresponds to the circumferential direction of the tire 2. Specifically, FIG. 4A shows a view of the upper side of the circumferential reinforcing layer 42 including a bundle of six parallel band cords 48 which are arranged from one side to the other side in the tire width direction (in the tire axis direction). FIG. 4B shows a view of the upper side of a band 38 in which a bundle of two parallel band cords 48 is wound from one side to the other side in the tire width direction (in the tire axis direction).

The tire 2 includes the circumferential reinforcing layer 42 with a jointless structure in which a bundle of two or more parallel band cords 48 is wound. To better achieve the advantageous effect, the tire 2 desirably includes a circumferential reinforcing layer in which a bundle of two or more parallel cords is wound from one side to the other side in the width direction (tire axis direction).

The mechanism by which the advantageous effect can be better achieved by using a circumferential reinforcing layer in which a bundle of two or more parallel cords is wound from one side to the other side in the tire width direction is not clear, but it is believed to be as follows. As described above, the occurrence of the voids can be reduced by a jointless band including a wound bundle of two or more parallel cords, so that good durability can be obtained. Accordingly, overall performance in terms of ride quality and durability is presumably significantly improved.

To better achieve the advantageous effect, the band cords 48 in the circumferential reinforcing layer 42 desirably each have a flexural stiffness (F) of 181 cm $\times$ g or less. The flexural stiffness (F) is preferably 142 cm $\times$ g or less, more preferably 134 cm $\times$ g or less, still more preferably 130 cm $\times$ g or less, further preferably 128 cm $\times$ g or less, further preferably 116 cm $\times$ g or less, further preferably 114 cm $\times$ g or less, further preferably 104 cm $\times$ g or less, still further preferably 91 cm $\times$ g or less, particularly preferably 83 cm $\times$ g or less. The lower limit is not limited, and it is preferably 10 cm $\times$ g or more, more preferably 25 cm $\times$ g or more, still more preferably 33 cm $\times$ g or more, further preferably 68 cm $\times$ g or more. When the flexural stiffness (F) is within the range indicated above, the advantageous effect tends to be better achieved.

The flexural stiffness is measured by a method described later in EXAMPLES.

The mechanism by which the advantageous effect can be better achieved by controlling the flexural stiffness of each cord to a predetermined value or less, particularly 130 cm $\times$ g or less, is not clear, but it is believed to be as follows. With the flexural stiffness of a predetermined value of less, the tire, when rolling over a step or the like, can deform in conformity with the shape of the step to thereby prevent the impact caused by thrust-up. Thus, good ride quality can be reliably obtained. Accordingly, overall performance in terms of ride quality and durability is presumably significantly improved.

To better achieve the advantageous effect, the number (N) of the parallel band cords 48 constituting the bundle in the tire 2 is preferably 2 or more, more preferably 4 or more, still more preferably 5 or more, while it is preferably 10 or less, more preferably 8 or less, still more preferably 7 or less. When the number is within the range indicated above, the advantageous effect tends to be better achieved.

Here, the number of the cords can be counted in a cross-section of a part of beginning or ending of winding of the circumferential reinforcing layer, such as the band 38 and the belt 40, around the tire.

To better achieve the advantageous effect, in the circumferential reinforcing layer 42, a bundle stiffness S (cm $\times$ g $\times$ number) defined by a product (F $\times$ N) of the flexural stiffness (F) of each band cord 48 and the number (N) of the parallel band cords 48 is preferably 1340 or less, more preferably 905 or less, still more preferably 710 or less, further preferably 670 or less, further preferably 640 or less, further preferably 580 or less, further preferably 570 or less, further preferably 520 or less, further preferably 455 or less, particularly preferably 415 or less. The lower limit is not limited, and it is preferably 165 or more, more preferably 268 or more, still more preferably 340 or more. When the bundle stiffness S is within the range indicated above, the advantageous effect tends to be better achieved.

To better achieve the advantageous effect, the band cords 48 in the circumferential reinforcing layer 42 each have an initial elongation under a load of 2.5 to 49.0 N of preferably 0.25% or more, more preferably 0.28% or more, still more preferably 0.29% or more, further preferably 0.32% or more, further preferably 0.35% or more, further preferably 0.38% or more, further preferably 0.40% or more, further preferably 0.41% or more, further preferably 0.42% or more, still more preferably 0.44% or more, particularly preferably 0.50% or more. The initial elongation is preferably 0.82% or less, more preferably 0.80% or less, still more preferably 0.76% or less, further preferably 0.75% or less. When the initial elongation is within the range indicated above, the advantageous effect tends to be better achieved.

Herein the initial elongation under a load of 2.5 to 49.0 N is measured by a method described later in EXAMPLES.

The mechanism by which the advantageous effect can be better achieved by controlling the initial elongation under a load of 2.5 to 49.0 N within the predetermined range, particularly within the range of 0.40 to 0.80%, is not clear, but it is believed to be as follows.

A predetermined elongation can be ensured by controlling the initial elongation to be a predetermined value or more. The band cords with the predetermined elongation can be prevented from coming into contact with belt cords or ply cords which are located inward of the band cords in the tire radial direction. Thus, these cords do not rub against each other during driving to prevent cord breakage, whereby good durability can be obtained.

Moreover, the band cords with the predetermined elongation or less exhibit a restriction force to suppress inflation during driving and external shape growth from the beginning to the end of driving. Thus, the tire performances can be maintained for a long time.

As a result of the above, durability is improved, and thus overall performance in terms of ride quality and durability is presumably significantly improved.

The band cords 48 in the circumferential reinforcing layer 42 preferably each have a $M \times N$ structure consisting of M strands of N filaments. Here, M and N each are an integer of 1 or more. To better achieve the advantageous effect, M is desirably 2 to 4, and N is desirably 3 to 5 or 7 to 12.

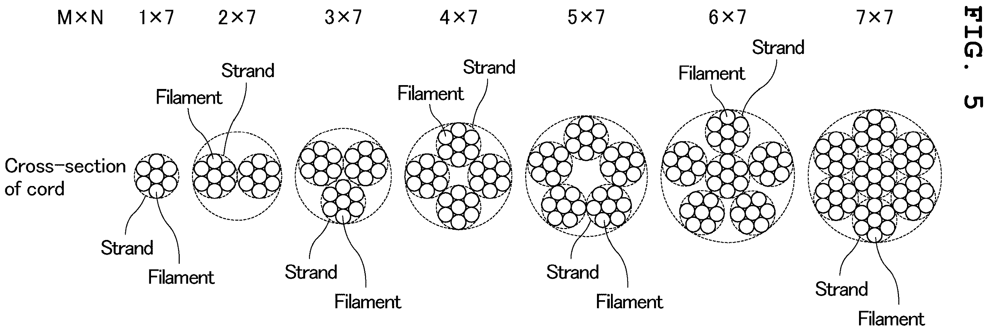

FIG. 5 shows schematic cross-sectional views of cords with a $M \times N$ structure in which the cords each have a $1 \times 7$, $2 \times 7$, $3 \times 7$, $4 \times 7$, $5 \times 7$, $6 \times 7$, or $7 \times 7$ structure.

The mechanism by which the advantageous effect can be better achieved by the cords having a $M \times N$ structure especially in which M is 2 to 4 and N is 3 to 5 or 7 to 12 is not clear, but it is believed to be as follows.

If M is 1 or 6 or more, the cords may have a core strand to reduce the initial elongation. Due to the poor elongation, the cords may come into contact with belt cords or ply cords which are located inward of the band cords in the tire radial direction. These cords may rub against each other during driving and therefore may be broken. To overcome the issue, M is controlled to be within the range of 2 to 4 to facilitate improvement of durability of the tire.

If N is 2 or less, a degree of intra-strand rubber penetration becomes high, and the flexural stiffness is increased. Consequently, the enveloping properties are reduced, thereby deteriorating ride quality.

If N is 6, the strand has a 1 + 5 structure. The degree of rubber penetration is high in this structure, and the flexural stiffness is increased. Consequently, the enveloping properties are reduced.

If N is 13 or more, the initial elongation is reduced. Due to the poor elongation, the cords may come into contact with belt cords or ply cords which are located inward of the band cords in the tire radial direction. These cords may rub against each other during driving and therefore may be broken.

For the above reasons, when M is 2 to 4 and N is 3 to 5 or 7 to 12, overall performance in terms of ride quality and durability is presumably significantly improved.

The band cords 48 in the circumferential reinforcing layer 42 each have a filament diameter of preferably 0.10 mm or more and 0.50 mm or less. The filament diameter is more preferably 0.18 mm or more, still more preferably 0.21 mm or more, further preferably 0.22 mm or more, while it is more preferably 0.38 mm or less, still more preferably 0.28 mm or less, further preferably 0.27 mm or less, further preferably 0.25 mm or less. When M is 2 or more, the circumscribed circle diameter of the twisted cords is preferably 0.2 mm or more and 1.0 mm or less. When the cords are each a single-strand cord with a $1 \times 1$ structure, the cross-sectional shape of each cord perpendicular to the longitudinal direction of the cord may be a flat shape. The outer diameter of the flat cross-section is a simple average of the shorter diameter and the longer diameter.

To better achieve the advantageous effect, the band cords 48 in the circumferential reinforcing layer 42 desirably each have a degree of inter-strand rubber penetration of 56% or higher. The degree of inter-strand rubber penetration is preferably 68% or higher, more preferably 75% or higher, still more preferably 80% or higher, further preferably 90% or higher, further preferably 98% or higher, and may be 100%. The upper limit is not limited. A highest possible degree of inter-strand rubber penetration is more desirable.

In the present invention, the degree (%) of inter-strand rubber penetration of a cord is measured by the following method.

1: A predetermined length (10 cm) of a cord is cut off.
2: One strand is taken out of the cut cord.
3: After taking out the one strand, the length of a region where rubber is adhered to the remaining strands is measured to calculate a value of "length (cm) of region where rubber is adhered/10 cm $\times$ 100 (%)". The value is determined as a degree (%) of inter-strand rubber penetration.

To better achieve the advantageous effect, the band cords 48 in the circumferential reinforcing layer 42 desirably each have a degree of intra-strand rubber penetration of 99% or lower. The degree of intra-strand rubber penetration is preferably 96% or lower, more preferably 75% or lower, still more preferably 50% or lower, further preferably 3% or lower, further preferably 2% or lower, further preferably 1% or lower, and may be 0%. The lower limit is not limited. A lowest possible degree of intra-strand rubber penetration is more desirable.

In the present invention, the degree (%) of intra-strand rubber penetration of a cord is measured by the following method.

> 1: A predetermined length (10 cm) of one strand is taken out.
> 2: One filament is taken out of the one strand.
> 3: After taking out the one filament, the length of a region where rubber is adhered to the remaining filaments is measured to calculate a value of "length (cm) of region where rubber is adhered/10 cm $\times$ 100 (%)". The value is determined as a degree (%) of intra-strand rubber penetration.

In the case of a strand of seven twisted filaments, two regions adjacent to a core filament that has been in contact with the taken filament are measured. When rubber is not adhered to one of the two regions, the region is counted as a region without rubber penetration.

The mechanism by which the advantageous effect can be better achieved by controlling the degree of inter-strand rubber penetration to be a predetermined value or higher and the degree of intra-strand rubber penetration to be a predetermined value or lower, particularly controlling the degree of inter-strand rubber penetration to be 80% or higher and the degree of intra-strand rubber penetration to be 50% or lower, is not clear, but it is believed to be as follows.

If the degree of inter-strand rubber penetration is low, water entering from a hole formed upon stepping on a nail, for example, invades in the longitudinal direction of the band cords, causing the cords to rust. While adjacent strands rub against each other during driving, the filaments gradually fray (fretting phenomenon). The fraying is fast in rusted cords. To overcome the problem, the degree of inter-strand rubber penetration is maintained to a predetermined value or higher to prevent water from invading the gaps between the band cords. Moreover, the rubber between the strands prevents fretting to prevent the cords from fraying. Thus, cord breakage is suppressed, and durability of the tire is improved.

The lower the degree of intra-strand rubber penetration is, the more the flexural stiffness of the band cords decreases. Consequently, the enveloping properties are improved, thereby improving ride quality. The filaments in the strand have the same twist pitch. Therefore, fretting due to rubbing of the filaments does not occur. Fretting does not occur even if water entering from a hole formed upon stepping on a nail, for example, and moving into the strand causes a part of the inside of the strand to rust. Thus, the problem of broken cords does not arise. Moreover, the high degree of inter-strand rubber penetration ensures the adhesion between the band cords and the rubber. Therefore, the problem of the rust in the strand does not arise.

Accordingly, overall performance in terms of ride quality and durability is presumably significantly improved.

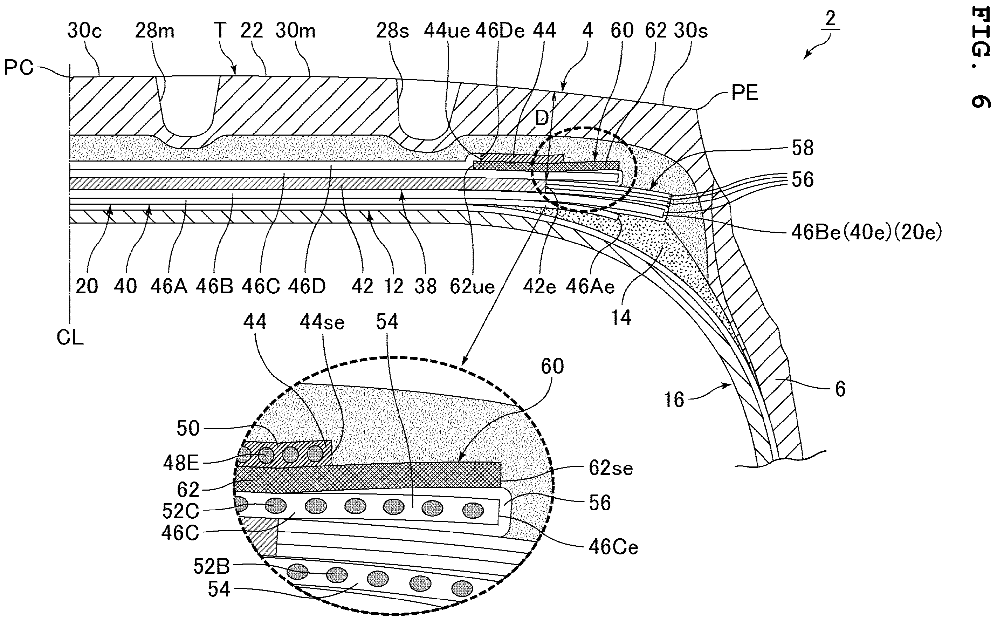

FIG. 6 shows a partial cross-section of the tire 2 in FIG. 1. FIG. 6 shows the tread portion T of the tire 2.

In the tire 2, the axially outer edge 46Be of the second belt ply 46B and the axially outer edge 46Ce of the third belt ply 46C are each covered by a rubber layer 56. Two rubber layers 56 are located between the axially outer edge 46Be of the second belt ply 46B and the axially outer edge 46Ce of the third belt ply 46C which are each covered by the rubber layer 56. The tire 2 includes an edge portion 58 consisting of total four rubber layers 56 between the axially outer edge 46Be of the second belt ply 46B and the axially outer edge 46Ce of the third belt ply 46C. The edge portion 58 desirably includes a cross-linked rubber. The edge portion 58 contributes to maintaining the distance between the axially outer edge 46Be of the second belt ply 46B and the axially outer edge 46Ce of the third belt ply 46C. In the tire 2, a change in the positional relationship between the axially outer edge 46Be of the second belt ply 46B and the axially outer edge 46Ce of the third belt ply 46C is suppressed. The edge portion 58 is a part of the reinforcing layer 20. The reinforcing layer 20 in the tire 2 includes a pair of the edge portions 58 in addition to the circumferential reinforcing layer 42 and the belt 40.

As described above, the circumferential reinforcing layer 42 in the tire 2 is disposed such that the axially outer edges 42e on both sides thereof face each other across the equatorial plane. The circumferential reinforcing layer 42 axially extends from the equatorial plane to the axially outer edges 42e. Moreover, in the tire 2, the edge bands 44 are located radially outward of the respective axially outer edges 42e of the circumferential reinforcing layer 42.

The tire 2 is a low-profile tire. The circumferential reinforcing layer 42 and a pair of the edge bands 44 efficiently suppress the deformation of the tread portion T. Thus, a change in the shape of the tire 2, for example, a change in the contour of the carcass 12 (hereinafter, also referred to as carcass line), is suppressed, thereby suppressing a change in the contact patch.

As described above, the band cords 48F in the circumferential reinforcing layer 42 extend substantially in the circumferential direction. In the tire 2 during driving, a force acts on the circumferential reinforcing layer 42 while radially spreading from the inside to the outside of the circumferential reinforcing layer 42. This force increases the tension of the band cords 48F.

In the tire 2, the edge bands 44 restrict the axially outer edges 42e of the circumferential reinforcing layer 42.

Thus, the tension fluctuation of the band cords 48F in the circumferential reinforcing layer 42 is suppressed, thereby suppressing the breaking of the band cords 48F due to the tension fluctuation. The circumferential reinforcing layer 42 in the tire 2 can stably suppress the shape change. The edge bands 44 are narrower than the circumferential reinforcing layer 42. Therefore, unlike the circumferential reinforcing layer 42, tension fluctuation is unlikely to occur in the band cords 48E in the edge bands 44. Thus, the band cords 48E in the edge bands 44 are less likely to be broken.

For example, as shown in FIG. 6, the tire 2 includes the circumferential reinforcing layer 42 between the second belt ply 46B and the third belt ply 46C which are wider than the circumferential reinforcing layer 42. The second belt ply 46B and the third belt ply 46C suppress the force acting on the circumferential reinforcing layer 42. In particular, when the belt cords 52 in the second belt ply 46B cross the belt cords 52 in the third belt ply 46C, the force acting on the circumferential reinforcing layer 42 is effectively suppressed. Thus, the tension fluctuation of the band cords 48 in the circumferential reinforcing layer 42 is suppressed, thereby suppressing the breaking of the band cords 48 due to the tension fluctuation. The circumferential reinforcing layer 42 in the tire 2 can stably suppress the shape change. From this point of view, preferably, the second belt ply 46B and the third belt ply 46C among the first belt ply 46A, the second belt ply 46B, and the third belt ply 46C in the belt 40 are preferably wider than the circumferential reinforcing layer 42, and the circumferential reinforcing layer 42 is preferably located between the second belt ply 46B and the third belt ply 46C. In this case, the belt cords 52 in the second belt ply 46B and the belt cords in the third belt ply 46C more preferably incline in opposite directions.

In the tire 2, in order to suppress tension fluctuation of the band cords 48 in the circumferential reinforcing layer 42 to thereby prevent the band cords 48 from breaking, the edge bands 44 are located outward of the respective axially outer edges 42e of the circumferential reinforcing layer 42. The edge bands 44 press the circumferential reinforcing layer 42. Thus, the radially inner part of each edge band 44 is likely to be distorted.

As described above, the circumferential reinforcing layer 42 is located between the second belt ply 46B and the third belt ply 46C. In other words, the third belt ply 46C is located between the edge bands 44 and the circumferential reinforcing layer 42. The third belt ply 46C includes the belt cords 52. Thus, if each edge band 44 is close to the third belt ply 46C, distortion will concentrate on the radially inner part of each edge band 44, potentially causing belt edge loose caused by the distortion. On the other hand, if each edge band 44 is far from the third belt ply 46C, a large volume of part is present between each edge band 44 and the third belt ply 46C. In this case, since rubber tends to generate heat when it deforms, belt edge loose caused by heat generation may potentially occur.

In FIG. 6, the symbol D indicates the thickness of the tread portion 4 on a straight line extending from the edge 42e of the circumferential reinforcing layer 42 in the tire width direction (an outer edge in the tire axis direction) to the tread surface 22 in the tire 2. The thickness D is a sum of the thickness of the base portion 24 and the thickness of the cap portion 26 on the straight line.

In the present invention, the thickness (D) of the tread portion on a straight line extending from an edge of the circumferential reinforcing layer in the tire width direction to the tread surface is the thickness of the tread portion measured along the normal of the surface of the tire passing on an edge of the circumferential reinforcing layer in the tire width direction. In the tire 2 including multiple circumferential reinforcing layers 42, the thickness (D) refers to the thickness of the tread portion on a straight line extending from the edge 42e, in the tire width direction, of the widest one among the multiple circumferential reinforcing layers 42 in the axis direction to the tread surface 22.

To better achieve the advantageous effect, the thickness D of the tread portion 4 on a straight line extending from the edge 42e of the circumferential reinforcing layer 42 in the tire width direction to the tread surface 22 is preferably 10.0 mm or more, more preferably 11.5 mm or more, still more preferably 11.9 mm or more, further preferably 12.9 mm or more, further preferably 13.6 mm or more, particularly preferably 14.1 mm or more, while it is preferably 20.1 mm or less, more preferably 19.8 mm or less, still more preferably 18.1 mm or less, further preferably 17.6 mm or less, further preferably 16.8 mm or less, particularly preferably 15.5 mm or less. When the thickness D is within the range indicated above, the advantageous effect tends to be better achieved.

In the present invention, to better achieve the advantageous effect, the stiffness G (N/mm) of the tread portion defined by a product ($D \times E$) of the thickness D (mm) of the tread portion 4 on a straight line extending from an edge of the circumferential reinforcing layer 42 in the tire width direction to the tread surface 22 and the complex modulus of elasticity E (MPa) of the rubber composition forming the cap portion 26 measured at a temperature of 70°C, an initial strain of 10%, a dynamic strain of $\pm$ 1%, a frequency of 10 Hz, and elongation mode is preferably 65 or more, more preferably 75 or more, still more preferably 78 or more, further preferably 80 or more, further preferably 81 or more, further preferably 86 or more, further preferably 89 or more, further preferably 98 or more, further preferably 109 or more, further preferably 110 or more, further preferably 119 or more, further preferably 127 or more, further preferably 131 or more, further preferably 133 or more, further preferably 137 or more. The upper limit is not limited, and it is preferably 160 or less, more preferably 150 or less, still more preferably 145 or less. When the stiffness G is within the range indicated above, the advantageous effect tends to be better achieved.

The reason for the advantageous effect is not exactly clear, but it is believed to be due to the following mechanism. Controlling the stiffness G of the tread portion to be 65 or more can facilitate suppression of the deformation at an edge of the circumferential reinforcing layer. Thus, durability may be more likely to be improved. Controlling the stiffness G of the tread portion to be 160 or less can suppress heat build-up on an outer side of the tire in the tire width direction during driving. Thus, heat-derived breakage in the rubber or at the attachment interface of the rubber and the cords can be prevented, whereby reduction of durability can be prevented.

In the tire 2 including the circumferential reinforcing layer 42, provided that the bundle stiffness S (cm $\times$ g $\times$ number) is defined by a product (F $\times$ N) of the flexural stiffness (F) of each band cord 48F in the circumferential reinforcing layer 42 and the number (N) of the parallel band cords 48F in the circumferential reinforcing layer 42 and that the stiffness G (N/mm) of the tread portion is defined by a product (D $\times$ E) of the thickness D (mm) of the tread portion 4 on a straight line extending from an edge of the circumferential reinforcing layer 42 in the tire width direction to the tread surface 22 and the complex modulus of elasticity E (MPa) of the rubber composition forming the cap portion 26 measured at a temperature of 70°C, an initial strain of 10%, a dynamic strain of $\pm$ 1%, a frequency of 10 Hz, and elongation mode, then, a ratio (S/G) (10g $\times$ mm$^2$ $\times$ number/N) of the bundle stiffness S (cm $\times$ g $\times$ number) to the stiffness G (N/mm) of the tread portion is 10.6 or lower.

The ratio S/G is preferably 10.0 or lower, more preferably 9.8 or lower, still more preferably 9.1 or lower, further preferably 8.3 or lower, further preferably 7.8 or lower, further preferably 6.8 or lower, further preferably 6.6 or lower, further preferably 6.1 or lower, further preferably 5.2 or lower, further preferably 5.1 or lower. The lower limit is not limited, and it is preferably 1.9 or higher, more preferably 3.4 or higher, still more preferably 3.5 or higher, further preferably 4.1 or higher, further preferably 4.4 or higher, further preferably 4.6 or higher, further preferably 4.7 or higher. When the ratio is within the range indicated above, the advantageous effect tends to be better achieved.

In the tire 2 including the circumferential reinforcing layer 42, to better achieve the advantageous effect, a ratio (F/E) of the flexural stiffness F (cm $\times$ g) of each band cord 48F in the circumferential reinforcing layer 42 to the complex modulus of elasticity E (MPa) of the rubber composition forming the cap portion 26 measured at a temperature of 70°C, an initial strain of 10%, a dynamic strain of $\pm$ 1%, a frequency of 10 Hz, and elongation mode is preferably 29 or lower, more preferably 24 or lower, still more preferably 23 or lower, further preferably 21 or lower, further preferably 20 or lower, further preferably 19 or lower, further preferably 18 or lower, further preferably 17 or lower. The lower limit is not limited, and it is preferably 5 or higher, more preferably 10 or higher, still more preferably 11 or higher, further preferably 13 or higher. When the ratio is within the range indicated above, the advantageous effect tends to be better achieved.

The reason for the advantageous effect is not exactly clear, but it is believed to be due to the following mechanism. With a low ratio of the flexural stiffness of each band cord to the elastic modulus of the cap portion 26, stress concentration on an edge of the circumferential reinforcing layer caused by deformation during rolling can be suppressed, presumably thereby facilitating improvement of durability.

In the tire 2 including the circumferential reinforcing layer 42, to better achieve the advantageous effect, a ratio (F/D) (10g) of the flexural stiffness F (cm g) of each band cord 48F in the circumferential reinforcing layer 42 to the thickness D (mm) of the tread portion 4 on a straight line extending from an edge of the circumferential reinforcing layer 42 in the tire width direction to the tread surface 22 is preferably 13 or lower, more preferably 12 or lower, still more preferably 11 or lower, further preferably 10 or lower, further preferably 8 or lower, further preferably 7 or lower, further preferably 6 or lower, particularly preferably 5 or lower. The lower limit is not limited, and it is preferably 1 or higher, more preferably 2 or higher, still more preferably 3 or higher, further preferably 4 or higher. When the ratio is within the range indicated above, the advantageous effect tends to be better achieved.

The reason for the advantageous effect is not exactly clear, but it is believed to be due to the following mechanism. With a low ratio of the flexural stiffness of each band cord to the thickness of the cap portion 26, stress concentration on an edge of the circumferential reinforcing layer caused by deformation during rolling can be suppressed, presumably thereby facilitating improvement of durability.

The tire 2 desirably includes a buffer layer 60 including a cross-linked rubber between the third belt ply 46C and the edge bands 44.

The buffer layer 60 has a sheet shape and thus effectively reduces the risks of belt edge loose caused by distortion and belt edge loose caused by heat generation. The buffer layer 60 contributes to reducing the risk of belt edge loose. From this point of view, preferably, the reinforcing layer 20 includes the buffer layer 60 including a cross-linked rubber, and the buffer layer 60 is located between the third belt ply 46C and a pair of the edge bands 44 in the radial direction. The thickness of the buffer layer 60 in the tire 2 is appropriately set.

As shown in FIG. 6, the buffer layer 60 in the tire 2 consists of a pair of the narrow buffer layers 62 which are disposed to face each other across the equatorial plane. The narrow buffer layers 62 are located directly below the respective edge bands 44.

In the tire 2, the position of an axially outer edge 62se of the narrow buffer layer 62 is identical to the position of the outer edge 46Ce of the third belt ply 46C in the axis direction. The position of the axially outer edge 62se of the narrow buffer layer 62 may be identical to the position of the axially outer edge 44se of each edge band 44 in the axis direction. The axially outer edge 62se of the narrow buffer layer 62 may be located between the edge 46Ce of the third belt ply 46C and the axially outer edge 44se of each edge band 44. Taking the effect of the edge bands 44 into consideration, the position of the axially outer edge 62se of the narrow buffer layer 62 is appropriately controlled to be between the axially outer edge 44se of each edge band 44 and the edge 46Ce of the third belt ply 46C.

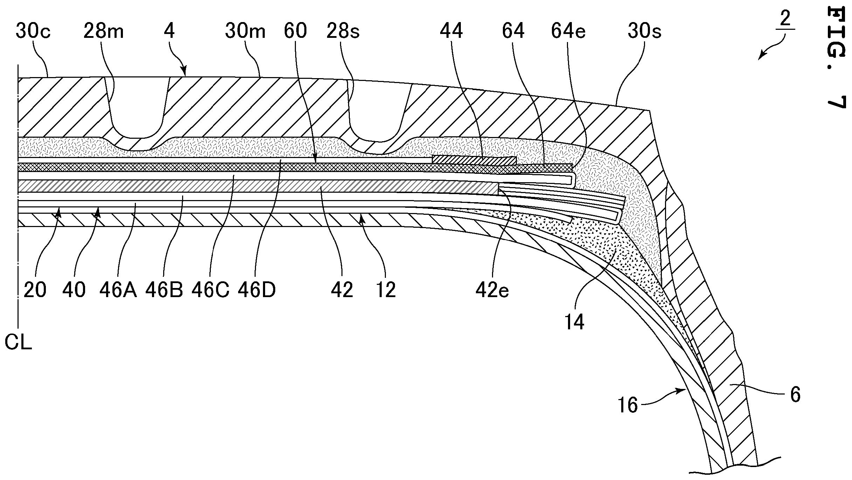

As shown in FIG. 7, the buffer layer 60 in the tire 2 may consist of a wide buffer layer 64 in which both ends 64e face each other across the equatorial plane. In this case, the number of components constituting the tire 2 is reduced as compared to the case where the buffer layer 60 consists of a pair of the narrow buffer layers 62. The reinforcing layer 20a in FIG. 7 can contribute to higher productivity.

As described above, in the tire 2, the axially inner edge 44ue of each edge band 44 is located axially inward of the axially outer edge 42e of the circumferential reinforcing layer 42. In FIG. 6, the length indicated by symbol We refers to the distance from the axially outer edge 42e of the circumferential reinforcing layer 42 to the axially inner edge 44ue of each edge band 44 in the axis direction.

In the tire 2, the position of the axially inner edge 44ue of each edge band 44 is set while considering the influence of the position on the occurrence of damage starting from the bottom of the shoulder circumferential groove 28s. To effectively suppress the occurrence of damage starting from the bottom of the shoulder circumferential groove 28s, the axially inner edge 44ue of each edge band 44 is preferably located axially outward of the bottom of the shoulder circumferential groove 28s in the axis direction. More preferably, the axially inner edge 44ue is located axially further outward of the shoulder circumferential groove 28s. In the tire 2, the axially inner edge 44ue of each edge band 44 may be located inward of the bottom of the shoulder circumferential groove 28s in the axis direction. In this case, the axially inner edge 44ue of each edge band 44 is more preferably located further inward of the shoulder circumferential groove 28s in the axis direction.

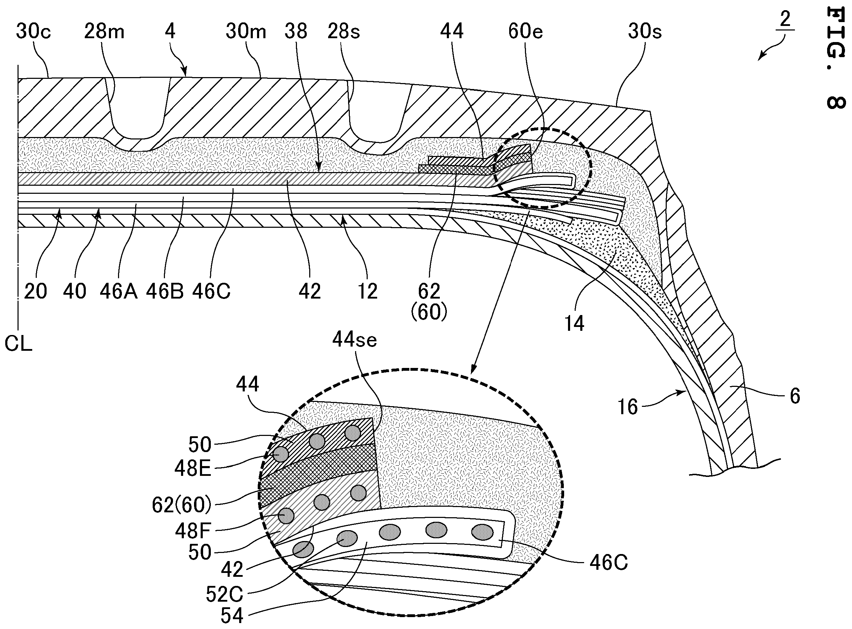

FIG. 8 shows a modified example of the reinforcing layer 20. The reinforcing layer 20b has almost the same structure as the reinforcing layer 20 in FIG. 6, except that the fourth belt ply 46D is not present, and the position of the circumferential reinforcing layer 42 is different. The symbols used in FIG. 6 are used for the structural elements which are the same as those in the reinforcing layer 20 in FIG. 6, and descriptions of the same structural elements are omitted.

In this reinforcing layer 20b, the circumferential reinforcing layer 42 as a whole is located radially outward of the belt 40. The circumferential reinforcing layer 42 disposed between the third belt ply 46C and the second belt ply 46B in the reinforcing layer 20 in FIG. 6 is disposed radially outward of the third belt ply 46C in the reinforcing layer 20b. A pair of the narrow buffer layers 62 constituting the buffer layer 60 is located between the circumferential reinforcing layer 42 and a pair of the edge bands 44.

FIGS. 1, 2, and 6 show an embodiment in which a belt layer in the reinforcing layer is present on the radially inner or outer side of the circumferential reinforcing layer 42. As described above, in another exemplary embodiment, at least one layer of the belt plies (the first belt ply 46A, the second belt ply 46B, the third belt ply 46C, the fourth belt ply 46D, etc.) in the belt 40 may constitute the circumferential reinforcing layer.

In the tire in which at least one of the belt plies in the belt 40 constitutes the circumferential reinforcing layer, the circumferential reinforcing layer satisfies the ratio S/G of 10.6 or lower.

Also in this tire, the following values are each desirably within the range indicated above for the circumferential reinforcing layer 42: the flexural stiffness of each cord in the circumferential reinforcing layer; the number of the cords; a product ($F \times N$) of the flexural stiffness (F) of each cord and the number (N) of the parallel cords; the initial elongation of each cord under a load of 2.5 to 49.0 N; the $M \times N$ structure of the cords; the filament diameter; the degree of inter-strand rubber penetration of the cords; the degree of intra-strand rubber penetration of the cords; the thickness (D) of the tread portion on a straight line extending from an edge of the circumferential reinforcing layer in the tire width direction to the tread surface; the stiffness G of the tread portion defined by a product ($D \times E$) of the thickness (D) of the tread portion on a straight line extending from an edge of the circumferential reinforcing layer in the tire width direction to the tread surface and the complex modulus of elasticity E of the rubber composition in the cap tread measured at a temperature of 70°C, an initial strain of 10%, a dynamic strain of ± 1%, a frequency of 10 Hz, and elongation mode; a ratio (F/E) of the flexural stiffness F of each cord in the circumferential reinforcing layer to the complex modulus of elasticity E of the rubber composition in the cap tread measured at a temperature of 70°C, an initial strain of 10%, a dynamic strain of ± 1%, a frequency of 10 Hz, and elongation mode; and a ratio (F/D) of the flexural stiffness F of each cord in the circumferential reinforcing layer to the thickness D of the tread portion on a straight line extending from an edge of the circumferential reinforcing layer in the tire width direction to the tread surface.

As is clear from the above, the present invention can improve overall performance in terms of ride quality and durability. The present invention exhibits a significant effect especially in a low-profile heavy-duty pneumatic tire 2 which has a profile of 65% or lower.

EXAMPLES

Examples (working examples) which are considered preferable to implement the present invention are described below. Yet, the scope of the invention is not limited to the examples.

A prototype heavy-duty pneumatic tire (tire size = 355/50R22.5) having a basic structure shown in FIGS. 1, 2, and 6 and the specification shown in Table 1 below is produced. The prototype tire is measured for various physical properties and evaluated (ride quality and durability) under the conditions below.

Circumferential reinforcing layer (jointless band (JLB): with a jointless band structure in which a bundle of two or more parallel cords is wound from one side to the other side in the tire width direction

Tread: a two-layer tread consisting of a cap portion (formulation: Table 1) and a base portion

The materials used in the cap portion shown in Table 1 are as follows.

NR: TSR20
BR 1: BR360B available from UBE Corporation
BR 2: CB24 available from LANXESS
Carbon black 1: SEAST N134 ($N_2SA$: 148 m$^2$/g) available from Mitsubishi Chemical Corporation
Carbon black 2: SEAST N220 ($N_2SA$: 114 m$^2$/g) available from Mitsubishi Chemical Corporation
Silica: ULTRASIL VN3 (rice husk silica, $N_2SA$: 175 m$^2$/g, average primary particle size: 18 mm) available from Evonik
Wax: SUNNOC N available from Ouchi Shinko Chemical Industrial Co., Ltd.
Antioxidant: Antigen 6C (N-(1,3-dimethylbutyl)-N'-phenyl-p-phenylenediamine) available from Sumitomo Chemical Co., Ltd.
Stearic acid: stearic acid "TSUBAKI" available from NOF Corporation
Zinc oxide: zinc oxide #1 available from Mitsui Mining & Smelting Co., Ltd.
Sulfur: powdered sulfur available from Karuizawa Sulfur Co., Ltd.
Vulcanization accelerator: NOCCELER CZ (N-cyclohexyl-2-benzothiazolylsulfenamide) available from Ouchi Shinko Chemical Industrial Co., Ltd.

<Viscoelastic testing>

A sample with a width of 4 mm, a length of 20 mm, and a thickness of 1 mm is collected from the cap tread of the prototype tire. The complex modulus of elasticity E (MPa) of the sample is measured using RSA series available from TA Instruments at a temperature of 70°C, an initial strain of 10%, a dynamic strain of ± 1%, a frequency of 10 Hz, and elongation mode.

<Flexural stiffness of band cord in circumferential reinforcing layer>

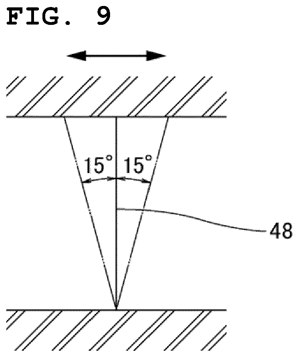

A band cord in the circumferential reinforcing layer taken out of the prototype tire is cut in a length of 145 mm. Both edges of the band cord are clamped to a stiffness tester (e.g., 150-D model) available from TABER. The band cord is bent to bending angles of +15° and -15° as shown in FIG. 9. An average of the bending moments at +15° and -15° is defined as a flexural stiffness (g × cm).

<Initial elongation of band cord in circumferential reinforcing layer under load of 2.5 to 49.0 N>

A band cord in the circumferential reinforcing layer taken out of the prototype tire is subjected to a tensile testing at a distance between chucks of 250 mm and a tensile rate of 50 mm/min in accordance with the testing methods for steel tire cords stipulated in JIS G 3510. With the elongation under a load of 2.5 N being set to 0, the elongation up to a total load of 49.0 N is measured and is defined as initial elongation.

<Ride quality>

Twenty drivers individually drive a test vehicle (tractor head) with a set of the prototype tires for 40 km. The drivers subjectively evaluate the ride quality during driving on a scale of one to five. A sum of the evaluation scores of the 20 drivers is expressed as an index relative to the sum in the reference comparative example set to 100. A higher index indicates better ride quality.

<Durability>

The prototype tire is mounted on a rim (22.5 × 11.75). Then, air is charged into the tire to adjust the internal pressure of the tire to the normal internal pressure. Next, the tire is mounted on every drive shaft of a test vehicle (tractor head). The test vehicle towing a trailer loaded with cargo is driven for a predetermined distance on a test course with an asphalt road surface.

After the driving, the tires are examined by shearography or X-rays analysis for the presence or absence of internal damage.

When no internal damage is found, the test vehicle is driven further until internal damage occurs.

The driving distance until internal damage occurs in each prototype tire is expressed as an index relative to the driving distance until internal damage occurs in the tire of the reference comparative example set to 100. A higher index indicates better durability.

The reference comparative examples are as follows.

Ride quality: Comparative Example 3
Durability: Comparative Example 6

[Table 1]

Specification / Cap portion blend (parts by mass) / Evaluation

| | Comparative Example | | | | | | Example | | | | | | | | | | | | | | |
|---|---|---|---|---|---|---|---|---|---|---|---|---|---|---|---|---|---|---|---|---|---|
| | 1 | 2 | 3 | 4 | 5 | 6 | 1 | 2 | 3 | 4 | 5 | 6 | 7 | 8 | 9 | 10 | 11 | 12 | 13 | 14 | 15 |
| Presence of circumferential reinforcing layer (JLB) | Not present | Present | Present | Present | Present | Present | Present | Present | Present | Present | Present | Present | Present | Present | Present | Present | Present | Present | Present | Present | Present |
| Complex modulus of elasticity (MPa) of cap treads | 7.2 | 4.6 | 5.6 | 4.8 | 4.8 | 5.3 | 5.5 | 5.9 | 7.8 | 7.8 | 6.3 | 6.3 | 6.0 | 6.0 | 6.3 | 5.5 | 6.8 | 6.3 | 6.3 | 6.3 | 6.3 |
| Thickness D (mm) of tread portion on straight line extending from edge of circumferential reinforcing layer in tire width direction to surface of tread portion | 18.0 | 9.2 | 13.8 | 9.6 | 10.0 | 16.5 | 11.9 | 13.6 | 16.8 | 17.6 | 15.5 | 15.5 | 18.1 | 19.8 | 20.1 | 13.6 | 11.5 | 13.6 | 12.9 | 14.1 | 14.1 |
| Stiffness G (N/mm) (= E × D) of tread portion | 130 | 42 | 77 | 46 | 48 | 87 | 65 | 80 | 131 | 137 | 98 | 98 | 109 | 119 | 127 | 75 | 78 | 86 | 81 | 89 | 89 |
| Flexural stiffness F (cm·g) of band cords in circumferential reinforcing layer | - | 484 | 371 | 484 | 371 | 371 | 134 | 134 | 134 | 134 | 128 | 68 | 114 | 104 | 116 | 91 | 142 | 181 | 83 | 83 | 33 |
| Number N (number) of parallel band cords in circumferential reinforcing layer | - | 1 | 1 | 1 | 2 | 10 | 2 | 5 | 5 | 10 | 5 | 5 | 5 | 5 | 5 | 5 | 5 | 5 | 5 | 5 | 5 |
| Bundle stiffness S (cm·g·number) (= F × N) of circumferential reinforcing layer | - | 484 | 371 | 484 | 742 | 3710 | 268 | 670 | 670 | 1340 | 640 | 340 | 570 | 520 | 580 | 455 | 710 | 905 | 415 | 415 | 165 |
| S/G (10 g·mm²·number/N) | - | 11.4 | 4.8 | 10.5 | 15.5 | 42.4 | 4.1 | 8.3 | 5.1 | 9.8 | 6.6 | 3.5 | 5.2 | 4.4 | 4.6 | 6.1 | 9.1 | 10.6 | 5.1 | 4.7 | 1.9 |
| Initial elongation (%) of band cords in circumferential reinforcing layer at 2.5 to 49.0 N | - | 0.18 | 0.25 | 0.19 | 0.22 | 0.24 | 0.32 | 0.28 | 0.28 | 0.29 | 0.35 | 0.38 | 0.76 | 0.42 | 0.44 | 0.41 | 0.44 | 0.25 | 0.38 | 0.50 | 0.82 |
| M × N structure of band cords in full band | - | 3 × 4 | 3 × 6 | 3 × 4 | 3 × 6 | 3 × 6 | 3 × 6 | 3 × 6 | 3 × 6 | 3 × 6 | 4 × 6 | 4 × 6 | 1 × 4 | 1 × 4 | 4 × 7 | 2 × 12 | 6 × 7 | 3 × 7 | 3 × 7 | 3 × 7 | 3 × 7 |
| Filament diameter (mm) | - | 0.415 | 0.35 | 0.415 | 0.35 | 0.35 | 0.27 | 0.27 | 0.27 | 0.27 | 0.25 | 0.21 | 0.38 | 0.38 | 0.22 | 0.22 | 0.22 | 0.28 | 0.22 | 0.22 | 0.18 |
| Degree (%) of inter-strand rubber penetration of band cords in circumferential reinforcing layer | - | 99 | 99 | 99 | 99 | 99 | 98 | 98 | 98 | 98 | 68 | 75 | 100 | 100 | 56 | 100 | 100 | 100 | 100 | 100 | 100 |
| Degree (%) of intra-strand rubber penetration of band cords in circumferential reinforcing layer | - | 85 | 100 | 85 | 100 | 100 | 99 | 99 | 99 | 99 | 96 | 99 | 100 | 3 | 0 | 0 | 2 | 1 | 1 | 1 | 0 |
| F/E (cm·g/MPa) | - | 105 | 66 | 101 | 77 | 70 | 24 | 23 | 17 | 17 | 20 | 11 | 19 | 17 | 18 | 17 | 21 | 29 | 13 | 13 | 5 |
| F/D (10·g) | - | 53 | 27 | 50 | 37 | 22 | 11 | 10 | 8 | 8 | 8 | 4 | 6 | 5 | 6 | 7 | 12 | 13 | 6 | 6 | 2 |
| NR | 70 | 80 | 100 | 80 | 80 | 80 | 80 | 100 | 70 | 70 | 100 | 100 | 100 | 100 | 100 | 80 | 70 | 100 | 100 | 100 | 100 |
| BR 1 | 30 | 20 | | 20 | 20 | 20 | 20 | | 30 | 30 | | | | | | 20 | 30 | | | | |
| BR 2 | | | | | | | | | | | | | | | | | | | | | |
| Carbon black 1 | 60 | 20 | 45 | 20 | 20 | 25 | 25 | 45 | 60 | 60 | 50 | 50 | 45 | 45 | 50 | 25 | 55 | 50 | 50 | 50 | 50 |
| Carbon black 2 | | | | | | 15 | 15 | | | | | | | | | 15 | | | | | |
| Silica | | 10 | 5 | 10 | 10 | 10 | 10 | 5 | 5 | | | | 5 | 5 | | 10 | 5 | | | | |
| Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Antioxidant | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Stearic acid | 3 | 3 | 3 | 3 | 3 | 3 | 3 | 3 | 3 | 3 | 3 | 3 | 3 | 3 | 3 | 3 | 3 | 3 | 3 | 3 | 3 |
| Zinc oxide | 3 | 3 | 3 | 3 | 3 | 3 | 3 | 3 | 3 | 3 | 3 | 3 | 3 | 3 | 3 | 3 | 3 | 3 | 3 | 3 | 3 |
| Sulfur | 1 | 1 | 1 | 1 | 1 | 1 | 1.2 | 1.2 | 1.2 | 1.2 | 1.2 | 1.2 | 1.2 | 1.2 | 1.2 | 1.2 | 1 | 1.2 | 1.2 | 1.2 | 1.2 |
| Vulcanization accelerator | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Ride quality | 88 | 96 | 100 | 98 | 96 | 92 | 108 | 110 | 114 | 108 | 110 | 116 | 120 | 122 | 122 | 122 | 120 | 120 | 122 | 124 | 122 |
| Durability | 76 | 83 | 86 | 89 | 95 | 100 | 104 | 108 | 110 | 113 | 110 | 115 | 117 | 117 | 118 | 123 | 118 | 117 | 120 | 128 | 120 |

REFERENCE SIGNS LIST

| 2 | tire |
|---|---|
| 4 | tread |
| 6 | sidewall |
| 8 | bead |
| 12 | carcass |
| 20 | reinforcing layer |
| 22 | tread surface |
| 28s | shoulder circumferential groove |
| 38 | band |
| 40 | belt |
| 42 | circumferential reinforcing layer |
| 44 | edge band |
| 46, 46A, 46B, 46C, 46D | belt ply |
| 48 | band cord |
| 52 | belt cord |
| 60 | buffer layer |
| 62 | narrow buffer layer |
| 64 | wide buffer layer |

## Claims

1. A tire (2), comprising a circumferential reinforcing layer (42) comprising a wound bundle of two or more parallel cords (48) and a cap tread,
   wherein

   the cords (48) each have a flexural stiffness F (cm × g), the flexural stiffness (cm x g) of a cord being defined as an average of bending moments of a cord at +15° and -15°, wherein a cord in the circumferential reinforcing layer taken out of a prototype tire is cut in a length of 145 mm and both edges of the cord are clamped to a stiffness tester;
   the parallel cords (48) of a bundle consist of a number N (number) of cords (48);
   a tread portion (4) has a thickness D (mm) on a straight line extending from a radially upper edge of the circumferential reinforcing layer (42) in a tire width direction to a surface of the tread portion (4);
   the cap tread includes a rubber composition having a complex modulus of elasticity E (MPa) as measured at a temperature of 70°C, an initial strain of 10%, a dynamic strain of ± 1%, a frequency of 10 Hz, and elongation mode;
   the circumferential reinforcing layer (42) has a bundle stiffness S (cm × g × number) defined by F × N; and
   the tread portion (4) has a stiffness G (N/mm) defined by E × D,

   **characterized in that**

   the tire (2) has a ratio of the bundle stiffness S of the circumferential reinforcing layer (42) to the stiffness G of the tread portion (4),
   S/G (10g × mm$^2$ × number/N), of 10.6 or lower.

2. The tire (2) according to claim 1,
   wherein the cords (48) in the circumferential reinforcing layer (42) each have a flexural stiffness of 130 cm × g or less.

3. The tire (2) according to claim 1 or 2,
   wherein the cords (48) in the circumferential reinforcing layer (42) each have an initial elongation of 0.40 to 0.80% under a load of 2.5 to 49.0 N.

4. The tire (2) according to any one of claims 1 to 3,
   wherein the cords (48) in the circumferential reinforcing layer (42) each have a M × N structure consisting of M strands of N filaments (wherein M represents an integer of 2 to 4, and N represents an integer of 3 to 5 or 7 to 12).

5. The tire (2) according to any one of claims 1 to 4,
   wherein the cords (48) in the circumferential reinforcing layer (42) each have a degree of inter-strand rubber penetration of 80% or higher and a degree of intra-strand rubber penetration of 50% or lower.

**6.** The tire (2) according to any one of claims 1 to 5,
wherein the circumferential reinforcing layer (42) comprises a wound bundle of two or more parallel cords (48) which are arranged from one side to the other side in the tire width direction.

**7.** The tire (2) according to any one of claims 1 to 6,
wherein the circumferential reinforcing layer (42) has a bundle stiffness S (cm $\times$ g $\times$ number) of 580 or less.

**8.** The tire (2) according to any one of claims 1 to 7,
wherein the tread portion (4) has a stiffness G (N/mm) of 110 or more.

**9.** The tire (2) according to any one of claims 1 to 8,
wherein a ratio F/E (cm $\times$ g/MPa) is 19 or lower.

**10.** The tire (2) according to any one of claims 1 to 9,
wherein a ratio F/D (10g) is 6 or lower.

**Patentansprüche**

**1.** Reifen (2), der eine umlaufende Verstärkungslage (42) umfasst, welche ein gewundenes Bündel von zwei oder mehr parallelen Korden (48) und ein Kappenprofil umfasst,
wobei

die Korde (48) jeweils eine Biegesteifigkeit F (cm $\times$ g) aufweisen, wobei die Biegesteifigkeit (cm $\times$ g) eines Kords als ein Mittelwert von Biegemomenten eines Kords bei +15° und -15° definiert ist, wobei ein Kord in der umlaufenden Verstärkungslage, die aus einem Prototypreifen entnommen ist, in einer Länge von 145 mm abgeschnitten ist und beide Ränder des Kords in einem Steifigkeitstester eingespannt sind;
die parallelen Korde (48) eines Bündels aus einer Anzahl N (Anzahl) von Korden (48) bestehen;
ein Laufflächenabschnitt (4) eine Dicke D (mm) auf einer geraden Linie aufweist, die sich von einem radial oberen Rand der umlaufenden Verstärkungslage (42) in einer Reifenbreitenrichtung bis zu einer Oberfläche des Laufflächenabschnitts (4) erstreckt;
das Kappenprofil eine Gummizusammensetzung mit einem komplexen Elastizitätsmodul E (MPa) aufweist, wie dies bei einer Temperatur von 70°C, einer Anfangsdehnung von 10%, einer dynamischen Dehnung von $\pm1$ %, einer Frequenz von 10 Hz und in einem Elongationsmodus gemessen wird;
die umlaufende Verstärkungslage (42) eine Bündelsteifigkeit S (cm $\times$ g $\times$ Anzahl) aufweist, die durch F $\times$ N definiert ist; und
der Laufflächenabschnitt (4) eine Steifigkeit G (N/mm) aufweist, die durch E $\times$ D definiert ist,

**dadurch gekennzeichnet, dass**
der Reifen (2) ein Verhältnis der Bündelsteifigkeit S der umlaufenden Verstärkungslage (42) zu der Steifigkeit G des Laufflächenabschnitts (4), S/G (10g $\times$ mm$^2$ $\times$ Anzahl/N), von 10,6 oder weniger aufweist.

**2.** Reifen (2) nach Anspruch 1,
wobei die Korde (48) in der umlaufenden Verstärkungslage (42) jeweils eine Biegesteifigkeit von 130 cm $\times$ g oder weniger aufweisen.

**3.** Reifen (2) nach Anspruch 1 oder 2,
wobei die Korde (48) in der umlaufenden Verstärkungslage (42) jeweils eine Anfangselongation von 0,40 bis 0,80% unter einer Last von 2,5 bis 49,0 N aufweisen.

**4.** Reifen (2) nach einem der Ansprüche 1 bis 3,
wobei die Korde (48) in der umlaufenden Verstärkungslage (42) jeweils eine M $\times$ N Struktur aufweisen, die aus M Strängen von N Filamenten besteht (wobei M eine ganze Zahl von 2 bis 4 repräsentiert und N eine ganze Zahl von 3 bis 5 oder 7 bis 12 repräsentiert).

**5.** Reifen (2) nach einem der Ansprüche 1 bis 4,
wobei die Korde (48) in der umlaufenden Verstärkungslage (42) jeweils einen Grad einer Zwischenstrang-Gummidurchdringung von 80% oder höher oder einen Grad einer Innerstrang-Gummidurchdringung von 50% oder weniger aufweisen.

**6.** Reifen (2) nach einem der Ansprüche 1 bis 5,
wobei die umlaufende Verstärkungslage (42) ein gewundenes Bündel von zwei oder mehr parallelen Korden (48) aufweist, die von einer Seite bis zu der anderen Seite in der Reifenbreitenrichtung angeordnet sind.

**7.** Reifen (2) nach einem der Ansprüche 1 bis 6,
wobei die umlaufende Verstärkungslage (42) eine Bündelsteifigkeit S (cm $\times$ g $\times$ Anzahl) von 580 oder weniger aufweist.

**8.** Reifen (2) nach einem der Ansprüche 1 bis 7,
wobei der Laufflächenabschnitt (4) eine Steifigkeit G (N/mm) von 110 oder mehr aufweist.

**9.** Reifen (2) nach einem der Ansprüche 1 bis 8,
wobei ein Verhältnis F/E (cm $\times$ g/MPa) 19 oder weniger beträgt.

**10.** Reifen (2) nach einem der Ansprüche 1 bis 9,
wobei ein Verhältnis F/D (10g) 6 oder weniger beträgt.


**Revendications**

**1.** Pneumatique (2), comprenant une couche de renforcement circonférentielle (42) comprenant un faisceau enroulé de deux câblés parallèles ou plus (48) et une bande de roulement de chape, dans lequel

les câblés (48) ont chacun une rigidité à la flexion F (cm $\times$ g), la rigidité à la flexion (cm $\times$ g) d'un câblé étend définie comme moyenne de moments de flexion d'un câblé à +15° et -15°, un câblé dans la couche de renforcement circonférentielle issu d'un pneumatique prototype étant coupé en une longueur de 145 mm et les deux bords du câblé étant fixés à un testeur de rigidité ;
les câblés parallèles (48) d'un faisceau sont composés d'un nombre N (nombre) de câblés (48) ;
une portion formant bande de roulement (4) présente une épaisseur D (mm) sur une ligne droite s'étendant depuis un bord radialement supérieur de la couche de renforcement circonférentielle (42) dans une direction de la largeur du pneumatique jusqu'à une surface de la portion formant bande de roulement (4) ;
la bande de roulement de chape inclut une composition de caoutchouc ayant un module d'élasticité complexe E (MPa) tel que mesuré à une température de 70 °C, une contrainte initiale de 10 %, une contrainte dynamique de $\pm$1 %, une fréquence de 10 Hz, et un mode d'allongement ;
la couche de renforcement circonférentielle (42) a une rigidité de faisceau S (cm $\times$ g $\times$ nombre) définie par F $\times$ N : et
la portion formant bande de roulement (4) a une rigidité G (N/mm) définie par E $\times$ D,
**caractérisé en ce que**
le pneumatique (2) a un rapport de la rigidité de faisceau S de la couche de renforcement circonférentielle (42) sur la rigidité G de la portion formant bande de roulement (4), S/G (10g $\times$ mm$^2$ $\times$ nombre/N), de 10,6 ou inférieur.

**2.** Pneumatique (2) selon la revendication 1,
dans lequel les câblés (48) dans la couche de renforcement circonférentielle (42) ont chacun une rigidité de flexion de 130 cm $\times$ g ou moins.

**3.** Pneumatique (2) selon la revendication 1 ou 2,
dans lequel les câblés (48) dans la couche de renforcement circonférentielle (42) ont chacun un allongement initial de 0,40 à 0,80 % sous une charge de 2,5 à 49,0 N.

**4.** Pneumatique (2) selon l'une quelconque des revendications 1 à 3,
dans lequel les câblés (48) dans la couche de renforcement circonférentielle (42) ont chacun une structure M $\times$ N constituée de M torons de N filaments (M représentant un entier de 2 à 4, et N représentant un entier de 3 à 5 ou 7 à 12).

**5.** Pneumatique (2) selon l'une quelconque des revendications 1 à 4,
dans lequel les câblés (48) dans la couche de renforcement circonférentielle (42) ont chacun un degré de pénétration de caoutchouc inter-torons de 80 % ou plus et un degré de pénétration de caoutchouc inter-torons de 50 % ou moins.

**6.** Pneumatique (2) selon l'une quelconque des revendications 1 à 5,
dans lequel la couche de renforcement circonférentielle (42) comprend un faisceau enroulé de deux câblés parallèles ou plus (48) qui sont agencés depuis un côté jusqu'à l'autre côté dans la direction de la largeur du pneumatique.

**7.** Pneumatique (2) selon l'une quelconque des revendications 1 à 6,
dans lequel la couche de renforcement circonférentielle (42) a une rigidité de faisceau S (cm $\times$ g $\times$ nombre) de 580 ou moins.

**8.** Pneumatique (2) selon l'une quelconque des revendications 1 à 7,
dans lequel la portion formant bande de roulement (4) a une rigidité G (N/mm) de 110 ou plus.

**9.** Pneumatique (2) selon l'une quelconque des revendications 1 à 8,
dans lequel un rapport F/E (cm $\times$ g/MPa) est de 19 ou inférieur.

**10.** Pneumatique (2) selon l'une quelconque des revendications 1 à 9,
dans lequel un rapport F/D (10g) est de 6 ou inférieur.

FIG. 1

FIG. 2

FIG. 3

FIG. 4A

FIG. 4B

# FIG. 5

FIG. 6

FIG. 7

**FIG. 8**

# FIG. 9

**EP 4 364 968 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001522748 T
- JP 2000504655 T
- EP 2065226 A1
- JP H09105084 A
- EP 4227113 A1
- EP 3711978 A1

- US 4414370 A
- JP S596207 A
- JP H558005 B
- JP H1313522 A
- US 5010166 A

**Non-patent literature cited in the description**

- TREND 2000. Toagosei Co., vol. 3, 42-45